(19) **Europäisches Patentamt**

**European Patent Office**

**Office européen des brevets**

(11) **EP 1 081 352 A1**

(12) **EUROPEAN PATENT APPLICATION**

(43) Date of publication:
07.03.2001 Bulletin 2001/10

(51) Int. Cl.⁷: **F02B 37/24**, F02B 37/22

(21) Application number: 00116264.3

(22) Date of filing: 09.08.2000

(84) Designated Contracting States:
**AT BE CH CY DE DK ES FI FR GB GR IE IT LI LU MC NL PT SE**
Designated Extension States:
**AL LT LV MK RO SI**

(30) Priority: **30.08.1999 JP 24371999**

(71) Applicant:
**Mazda Motor Corporation**
**Aki-gun, Hiroshima 730-8670 (JP)**

(72) Inventors:
• **Matsue, Kouta**
**Aki-gun, Hiroshima 730-8670 (JP)**

• **Imai, Takeshi**
**Aki-gun, Hiroshima 730-8670 (JP)**
• **Ebino, Hiroshi**
**Aki-gun, Hiroshima 730-8670 (JP)**
• **Shouji, Masatoshi**
**Aki-gun, Hiroshima 730-8670 (JP)**

(74) Representative:
**Müller-Boré & Partner**
**Patentanwälte**
**Grafinger Strasse 2**
**81671 München (DE)**

(54) **Control system for supercharged engine**

(57)   A supercharged engine control system has a control unit (100) which establishes a target supercharging pressure to be generated in an intake air passage (7) and a target control pressure to be supplied to a control pressure passage (36) according to engine operating conditions including an engine speed that is detected by a speed sensor (86) and an engine load that is detected as accelerator travel by an accelerator position sensor (87) and performs, in order to prevent a supercharging from overspeeding and lower emission levels, supercharging pressure feedback control on the basis of a practical supercharging pressure which is superior in a control accuracy standpoint when an engine operating condition falls in a range of higher engine loads and in a range of engine operating conditions for exhaust gas recirculation or control pressure feedback control on the basis of a practical control pressure which is superior in a control response and stability standpoint.

FIG. 1

**Description**

The present invention relates to a control system for a supercharged engine and, more particularly, to a control system for a supercharged engine for feedback controlling a supercharging pressure that is generated by a variable geometry supercharger.

There have been widely employed turbochargers which increase an amount of air admitted into a combustion chamber by utilizing exhaust gas energy. Such a turbocharger, which generally comprises a turbine disposed in an intake air passage so as to be driven by an exhaust gas stream and a blower disposed in an exhaust gas passage and driven by the turbine, performs accelerated mixing of intake air and fuel and increases the rate of utilization of oxygen with an effect of improving combustion efficiency. Because of the significant effects, the turbocharger is, in particular, installed to a diesel engine as measures to lower emission levels.

In recent years, variable geometry turbochargers have been widely employed. Such a variable geometry turbocharger, as known from, for example Japanese Unexamined Patent Publication No. 10-77856, has variable-area nozzles which are formed by a number of movable vanes arranged at a turbine inlet in a turbine chamber and variable in angle so as to vary a nozzle area for variations of turbine efficiency. The variable geometry turbocharger controls a supercharging pressure in an intake air passage according to engine operating conditions by linearly varying the turbine efficiency by varying a nozzle area relative to the turbine. In a variable geometry turbocharger, a target supercharging pressure is determined on the basis of engine operating conditions such as engine speed and/or engine load, and a nozzle area relative to a turbine is feedback controlled so as to produce a target supercharging pressure in an intake air passage. This variable geometry turbocharger can control a practical supercharging pressure in the intake air passage with high accuracy so as to provide an ideally optimum supercharging pressure, which is always desirable for both engine acceleration and control of an emission level of NOx..

The variable geometry turbocharger disclosed in Japanese Unexamined Patent Publication No.10-77856 is accompanied by a vacuum operated actuator and a variable throttle such as a duty solenoid valve. The vacuum operated actuator reciprocally moves a spring loaded actuator rod by a diaphragm according to levels of negative pressure acting on a diaphragm, so as to vary inclinations of all of the movable vanes through a link mechanism, thereby varying the nozzle area. The duty solenoid valve, which supplies negative pressure to the vacuum operate actuator, is operated with a duty ratio which is varied according to the levels of negative pressure, i.e. desired nozzle areas. With the supercharging pressure control system, the supercharging pressure control commences with detecting first a practical supercharging pressure in the intake air passage and determining a target supercharging pressure. Then, the supercharging pressure control system energizes the duty solenoid valve with a duty ratio which corresponds to a feedback value corresponding to a pressure difference between the practical and the target supercharging pressures so as to generate a negative pressure. The vacuum operated actuator receives the negative pressure and varies inclinations of the movable vanes, namely the nozzle area, so as thereby to vary the practical supercharging pressure. This control process is repeated until the target supercharging pressure is developed in the intake air passage. In the case of feedback controlling the duty solenoid valve (supercharging pressure feedback control) on the basis of a practical supercharging pressure in the intake air passage and a target supercharging pressure, although the control is superior in a standpoint of accuracy of converging the supercharging pressure at the target supercharging pressure, there is a problem that detection of a resultant supercharging pressure after the feedback control takes a long time as compared with determination of a target supercharging pressure, which is often accompanied by a response delay which is always undesirable. As a result, the controlled supercharging pressure overshoots or the control is apt to cause hunting, so as to lose control stability and cause easily fluctuations in engine output The problem is troublesome during stable travel such as ordinary cruising. On the other hand, there is a correlation, though indirect; between controlled negative pressure that is generated by the duty solenoid valve and supplied to the vacuum operated actuator and a change in nozzle area of the supercharger that is caused by the negative pressure or supercharging pressure generated by the supercharger. Accordingly, in order to control the supercharging pressure, it is acceptable to feedback control the duty solenoid control on the basis of the controlled negative pressure supplied to the vacuum operated actuator in place of practical supercharging pressure in the intake air passage. In this case, the controlled negative pressure is a direct result of control by the duty solenoid valve, the feedback control on the basis of negative pressure is free from a long time lag that the feedback control based on supercharging pressure encounters, so as to be not affected by a response delay nor become unstable.

It is an object of the present invention to provide a control system for an engine equipped with a variable geometry supercharger which performs selectively accuracy-preferential supercharging pressure feedback control and stability-preferential supercharging pressure feedback control according to engine operating conditions.

The foregoing object of the present invention is accomplished by a supercharging pressure control system, which controls a supercharging pressure generated in an intake air passage by a supercharger, comprising supercharging pressure control means for controlling the supercharging pressure, vacuum operated drive means for driving the supercharging pressure control means, control pressure regulating means disposed in a negative control pressure passage between the vacuum operated drive means and a pressure source for regulating a control pressure that is supplied to the vacuum operated drive means, and control means which determines a target supercharging pressure to be generated in the intake air passage and a target control pressure to be supplied to the vacuum operated drive means, performs supercharging pressure feedback control of the control pressure regulating means so as to cancel a pressure difference of a supercharging pressure in the intake air passage that is detected by a pressure sensor from the target supercharging pressure and negative pressure feedback control by feedback controlling the negative pressure regulating means so as to cancel a pressure difference of a negative pressure that is detected by a pressure sensor from the target negative pressure, and implements selectively either one of or both the supercharging pressure feedback control and the negative pressure feedback control according to engine operating conditions.

With the supercharging pressure control system for a supercharged engine, the supercharging pressure feedback control which is performed on the basis of a pressure difference of a practical supercharging pressure from a target supercharging pressure and the control pressure feedback control which is performed on the basis of a pressure difference of a practical control pressure from a target control pressure are either selectively or concurrently implemented according to engine operating conditions. In either feedback control, the direct target of control is the control pressure control means, such as a duty solenoid valve, operative to supply a control control pressure to drive means such as a vacuum operated actuator, a final result of the feedback control appears as a change in supercharging pressure that is generated in the intake air passage by the supercharger. In the light of prominent control accuracy of the supercharging pressure feedback control and prominent control stability the control pressure feedback control, the supercharging pressure is controlled in the most suitable control form meeting an engine operating condition according to which control property should be regarded as vital and utilized practically or whether both control properties should be regarded as vital and utilized practically.

When utilizing a variable geometry type of turbocharger as the supercharging pressure control means which is variable in turbine efficiency by varying a nozzle area of the turbine disposed in the intake air passage so as thereby to vary the supercharging pressure, the feedback control of supercharging pressure can utilize practically both control accuracy and stability of feedback control and control supercharging pressure in the most suitable control forms meeting engine operating conditions during implementation of the feedback control. There are various supercharging pressure control means well known to those skilled in the art, and any known form of supercharging pressure control mean such as a waste-gate type of supercharger that vanes supercharging efficiency by regulating an opening of a bypass passage which allows exhaust gas to bypass a turbine.

The supercharging pressure control system may implement the supercharging pressure feedback control when the engine operating condition falls in a specified range of higher engine loads and the control pressure feedback control when the engine operating condition is out of the specified range of higher engine loads. To begin with, the target supercharging pressure is determined to be a little higher rather in the region of higher engine loads as compared with an increase in the amount of fuel injection. Accordingly, in the range of higher engine loads, if the control pressure feedback control, namely the supercharging pressure feedback control, is not performed with high accuracy on the basis of a supercharging pressure in the intake air passage, the controlled supercharging pressure becomes too high, so as to cause the turbine to overspeed and the turbine shaft to seize in consequence, as a result of which the reliability of the supercharger turns an issue. On the grounds, the supercharging pressure control system implements the supercharging pressure feedback control of superior control accuracy while the engine operates in the region of higher engine loads and the control pressure feedback control of superior control response and control stability while the engine operates in the region of engine operating conditions including ordinary engine operating conditions, where overspeeding and seizing are insignificant, but excluding higher loads engine operating conditions. The selective feedback control of supercharging pressure can utilize practically both control accuracy and stability and control supercharging pressure in the most suitable control forms meeting engine operating conditions during implementation of the feedback control of supercharging pressure.

The super charging pressure control system may implement the supercharging pressure feedback control when the engine operating condition falls in a specified range of engine operating conditions in which exhaust gas is partly admitted into the intake air passage according to engine operating conditions and the control pressure feedback control when the engine operating condition is out of the specified range of engine operating conditions. Though the exhaust gas recirculation is effective to lower emission levels of NOx fort he most, since a recirculation passage through which exhaust gas is partly recirculated is disposed between the intake air pasage and the exhaust gas passage, fluctuations occur in the amount of exhaust gas that is admitted into the intake air passage while the engine operates in the specified range of engine operating conditions for exhaust gas recirculation if the control pressure feedback control, namely the supercharging pressure feedback control, is not performed on the basis of a practical supercharging pressure with high accuracy, as a result of which the emission level of NOx fluctuates. Therefore, the supercharging pressure control system implements the supercharging pressure feedback control of superior control accuracy while the engine operates in the specified region of engine operating conditions for exhaust gas recirculation and the control pressure feedback control of superior control response and control stability while the engine operates out of the specified region of engine operating conditions for exhaust gas recirculation, in other words, in a region of engine operating conditions where there occur no fluctuation in NOx emission level. The selective feedback control of supercharging pressure can utilize practically both control accuracy and stability and control supercharging pressure in the most suitable control forms meeting engine operating conditions during implementation of the feedback control of supercharging pressure.

The supercharging pressure control system may further perform control pressure learning control for learning a deviation of a control pressure that is generated by the control pressure regulation means such as a duty solenoid valve while implementing the control pressure feedback control. Learning a deviation of a control pressure generate by the control pressure regulation means that is a direct target of control prevents controlled supercharging pressure, and hence controlled supercharging pressure, from changing with a deviation due, for example, to a individual difference of the duty solenoid valve, so as to remain or improve the accuracy of control.

The supercharging pressure control system may perform the control pressure feedback control so as to cancel a difference between an average of a plurality of the control pressures that are detected with time and a difference between an average of a plurality of the target control pressures that are determined with time. The supercharging pressure feedback control includes an integration process in consideration not only with practical and target control pressures at the moment of detection but also with their past records, a feedback control value as a result of the integration process, and hence a controlled supercharging pressure, is prevented from sharply changing, which leads to stabilization of the supercharging pressure feedback control.

The above and other objects and features of the present invention will be clearly understood from the following description with respect to the preferred embodiment thereof when considered in conjunction with the accompanying drawings, in which:

Figure 1 is an illustration showing the overall structure of a supercharging pressure control system in accordance with a preferred embodiment of the invention;

Figure 2 is an enlarged cross-sectional view showing an interior structure of a turbine of a variable geometric turbocharger;

Figure 3 is an enlarged cross-sectional view of a vacuum operated actuator,

Figure 4 is an enlarged cross-sectional view of an exhaust gas recirculation valve;

Figure 5 is a control map of engine operating zone for implementation of exhaust gas recirculation control;

Figure 6 is a control map of engine operating zone with respect to nozzle area;

Figure 7 is a control map of engine operating zone for implementation of supercharging pressure feedback control;

Figure 8 is a control map of engine operating zone for implementation of supercharging pressure open control;

Figures 9A and 9B are respective parts of a flow chart illustrating a sequence routine of control of supercharging pressure control solenoid valve;

Figure 10 is a flow chart illustrating a sequence routine of target negative pressure setting control;

Figure 11 is a control map of a charging cut-off region;

Figure 12 is a characteristic curve of nozzle area with respect to atmosphere temperature;

Figure 13 is a characteristic curve of nozzle area with respect to intake air temperature;

Figure 14 is a flow chart illustrating a sequence routine of negative pressure feedback control;

Figures 15A, 15B and 15C are respective parts of a flow chart illustrating a sequence routine of negative pressure learning control;

Figure 16 is a characteristic curve provided by the negative pressure learning control;

Figure 17 is a diagram showing data that are obtained from the characteristic curve provided by the negative pressure learning control;

Figure 18 is a time chart of the negative pressure learning control;

Figure 19 is a flow chart illustrating a sequence routine of supercharging pressure feedback control;

Figure 20 is a time chart of the supercharging pressure feedback control; and

Figure 21 is a diagram showing the relationship between battery voltage and correction factor for a calculation of duty rate.

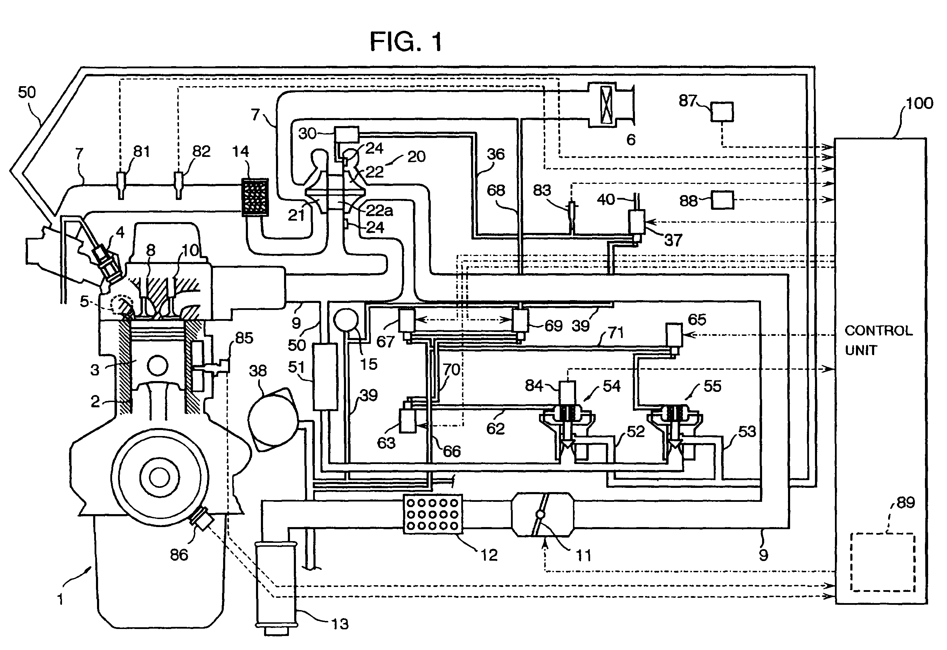

Referring to the drawings in detail, and in particular, to Figure 1 which shows the overall structure of an exhaust gas purifying system for a diesel engine according to a preferred embodiment of the invention, denoted by a reference numeral 1 is a multiple cylinder diesel engine carried in a vehicle. The diesel engine 1 has multiple cylinders 2 (only one of which is shown in the figure), in which pistons 3 are received to slide. A pre-combustion chamber 5 is formed above a combustion chamber that is formed inside each cylinder 2 by the piston 3. A fuel injector (fuel injection valve) 4 is located such as to deliver fuel into the pre-combustion chamber 5. Intake air is introduced into the engine through an intake air passage 7 which is equipped with an air cleaner 6 at its upstream end and branches off at its downstream end so as to lead to intake ports of the cylinders 2. The intake port is opened and closed by an intake valve 8 at an appropriate timing. The intake air passage 6 is provided with a blower 21 forming a part of a variable geometry type of turbocharger 20 and an intercooler 14. Exhaust gas is discharged through an exhaust gas passage 9 which branches off at its upstream end so as to extend from exhaust ports of the cylinders 2. The exhaust port is opened and closed by an exhaust valve 9 at an appropriate timing. The exhaust gas passage 9 is provided with a turbine wheel 22 pivotally mounted on a turbine shaft 22a forming a part of the variable geometry turbocharger 20, an exhaust shutter 11 operative to promote warming-up of the diesel engine while an engine cooling water is at low temperatures, a catalytic converter 12 operative to lower emission levels of HC, CO and NOx, and a silencer 13. The turbine wheel 22, which is driven by exhaust gas in the exhaust gas passage 9, drives the blower 21 to compress intake air in the intake air passage 7. The compressed intake air is cooled down 1 to increase consistency thereof

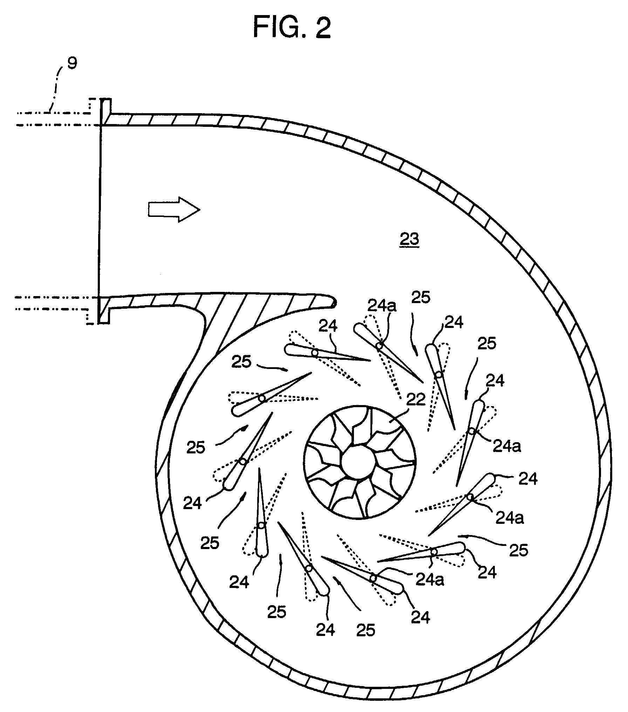

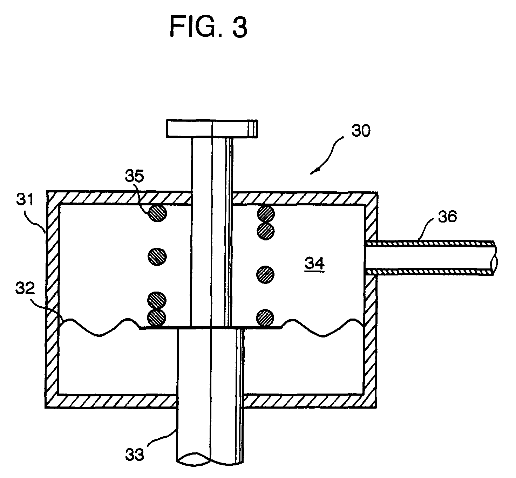

As shown in detail in Figure 2, the turbine 21 has a number of movable vanes 24 pivotally mounted on vane shafts 24a which are arranged so as to surround the turbine wheel 22 in a turbine chamber 23 into which an exhaust gas stream enter through a turbine inlet (not shown) as indicated by an arrow. The turbine wheel 22 increases its turbine efficiency by reducing a nozzle area of each of variable-area nozzle 25 that are formed between respective adjacent movable vanes 24 and, on the other hand, increases its turbine efficiency by increasing the nozzle area of the nozzle 25. The movable vanes 24 are driven by the vacuum operated actuator 30 to change their angles with respect to the turbine wheel 22. As shown in detail in Figure 3, the vacuum operated actuator 30 has a diaphragm 32 by which the interior of an actuator housing 31 is formed with a vacuum chamber 34, an actuator rod 33 which is fixedly connected at one of its opposite ends to the diaphragm 32, and a coil spring 35 disposed in the vacuum chamber 34 so as to surround the actuator rod 33. The actuator rod 33 at another end is connected to the respective movable vanes 24 through a link mechanism (not shown). The vacuum operated actuator 30 operates such that, when a negative pressure in the vacuum chamber 34 is low (which indicates that the absolute level of negative pressure is low), the actuator rod 33 is forced by the coil spring 35 to protrude partly out of the actuator housing 31, so as to drive the movable vanes 24 of the turbine wheel 22 in one of opposite directions through the link mechanism, thereby increasing the nozzle area of the nozzle 25 and, on the other hand, when the negative pressure in the vacuum chamber 34 is high (which indicates that the absolute level of negative pressure is high), the actuator rod 33 is forced by the diaphragm 32 to retract into the actuator housing 31 against the coil spring 35, so as to drive the movable vanes 24 of the turbine wheel 22 in another direction through the link mechanism, thereby reducing the nozzle area of the nozzle 25.

Referring back to Figure 1, a negative pressure (VGT negative pressure) passage 36 extends from the vacuum chamber 34 of the vacuum operated actuator 30 and leads to a duty solenoid valve (VGT duty solenoid valve) 37. The duty solenoid valve 37 is energized to generate a negative pressure as a VGT negative pressure according to duty ratios from a negative pressure supplied by an engine operated vacuum pump 38 through a first negative pressure passage 39 and an atmospheric pressure supplied through a first atmospheric pressure passage 40 and directs the VGT negative pressure to the vacuum chamber 34 of the vacuum operated actuator 30 through the VGT negative pressure passage 36. When the VGT duty valve 37 is energized with a duty ratio of 0%, it provides a negative pressure admission ratio of 0% and an atmospheric pressure admission ratio of 100% so as to force the actuator rod 33 to protrude as much as possible, thereby increasing the nozzle area of the turbine wheel 22 as large as possible. On the other hand, when the VGT duty valve 37 is energized with a duty ratio of 100%, it provides a negative pressure admission ratio of 100% and an atmospheric pressure admission ratio of 0% so as to force the actuator rod 33 back to retract as much as possible, thereby reducing the nozzle area of the turbine wheel 22 as small as possible. Further, when the VGT duty valve 37 is energized with a duty ratio variable between 0% and 100%, so as to regulate linearly and accurately the turbine efficiency. The first negative pressure passage 39 is equipped with a negative pressure tank 15 operative to restrain fluctuations in negative pressure that is generated by the engine operated vacuum pump 38. The term "negative pressure admission ratio" as used herein shall means and refer to a ratio of negative pressure that is admitted to the VGT negative pressure passage 36 from the first negative pressure passage 39, and the term "atmospheric pressure admission ratio" as used herein shall means and refer to a ratio of atmospheric pressure that is admitted to the VGT negative pressure passage 36 from the first atmospheric pressure passage 40.

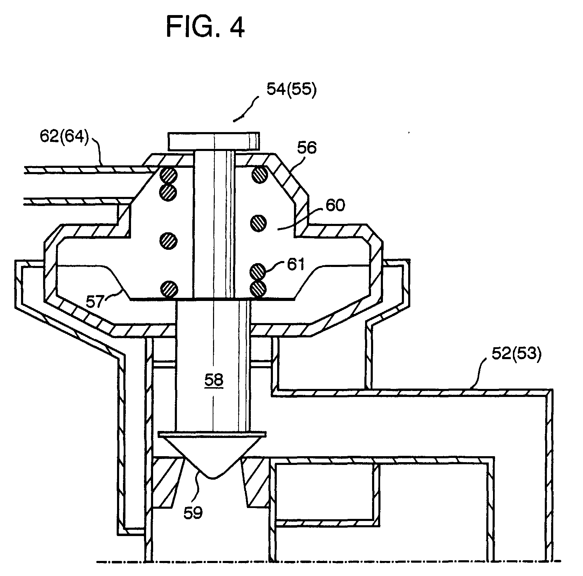

Provided between the intake air passage 7 and the exhaust gas passage 9 is an exhaust gas recirculation (EGR) passage 50 which .extends from the exhaust gas passage 9 upstream from the turbine to the intake air passage 7 downstream from the blower 21 so as to admit partly exhaust gas into the intake air passage 7 from the exhaust gas passage 9 and supplies it into the combustion chambers of the diesel engine 1 and is provided with a cooler 51 operative to cool down the exhaust gas so as thereby to increase consistency of the exhaust gas. The EGR passage 50 at the downstream side from the cooler 51 branches off into two parts, namely first and second EGR branch passages 52 and 53 which are provided with first and second exhaust gas recirculation (EGR) valves 54 and 55, respectively, and joined together after the first and second EGR valves 54 and 55. The first and second EGR valves 54 and 55 are substantially same in structure as shown in Figure 4. Specifically, the EGR valve 54, 55 has a valve housing 56, a diaphragm 57 by which the interior of the valve housing 56 is formed with a vacuum chamber 60, a valve stem 58 which is fixedly connected at one of its opposite ends to the diaphragm 57, a valve body 59 extending into the EGR branch passage 52, 53, and a coil spring 61 disposed in the vacuum chamber 60 so as to surround the valve stem 58. The EGR valve 54, 55 operates such that, when a negative pressure in the vacuum chamber 60 is low (which indicates that the absolute level of negative pressure is low), the valve stem 58 is forced by the coil spring 61 to protrude partly out of the valve housing 56, so as to force the valve body 59 to enter the EGR branch passage 52, 53 and shut off it and, on the other hand, when the negative pressure in the vacuum chamber 60 is high (which indicates that the absolute level of negative pressure is high), the valve stem 58 is forced by the diaphragm 57 to retract into the valve housing 56 against the coil spring 61, so as to force the valve body 59 back to escape from the EGR branch passage 52, 53 and open it.

A first negative pressure passage 62 extending from the vacuum chamber 60 of the first EGR valve 54 leads to a duty solenoid valve 63, and a second negative pressure passage 64 extending from the vacuum chamber 60 of the second EGR valve 55 leads to an on-off solenoid valve 65. A negative pressure regulation duty solenoid valve 67 is supplied with a negative pressure generated by the engine operated vacuum pump 38 through a second negative pressure passage 66, and a atmospheric pressure regulation duty solenoid valve 69 is supplied with atmospheric pressure through a second atmospheric pressure passage 68. Negative pressure that is pre-regulated by the atmospheric pressure regulation duty solenoid valve 69 is supplied to the duty solenoid valve 63 through a negative pressure passage 70. The duty solenoid valve 63, which is of a three-way type, provides a negative pressure admission ratio of 0% between the first negative pressure passage 62 and the negative pressure passage 70 and opens the first negative pressure passage 62 to the atmosphere when it is energized with a duty ratio of 0% so as to force the valve stem 58 of the first exhaust gas recirculation valve 54 to protrude as much as possible, thereby completely closing the first EGR branch passage 52.,

On the other hand, when the duty solenoid valve 63 is energized with a duty ratio of 100%, it provides a negative pressure admission ratio of 100% between the first negative pressure passage 62 and the negative pressure passage 70 so as to force the valve stem 58 of the first exhaust gas recirculation valve 54 back to retract as much as possible, thereby completely opening the first EGR branch passage 52. Further, when the duty solenoid valve 63 is energized with a duty ratio variable between 0% and 100%, so as to regulate linearly and accurately the admission ratio, and hence the amount of exhaust gas that is recirculated. Negative pressure generated by the engine operated vacuum pump 38 is directly supplied to the on-off solenoid valve 65 through a negative pressure passage 71 branching off from the second negative pressure passage 66 without being pre-regulated by the duty solenoid valves 67 and 69. When the on-off solenoid valve 65, which is of a three-way type, is off, it provides a negative pressure admission ratio of 0% and opens the second negative pressure passage to the atmosphere so as to force the valve stem 58 of the second exhaust gas recirculation valve 55, thereby completely closing the second EGR branch passage 53. On the other hand, when the on-off solenoid valve 65 is on, it provides a negative pressure admission ratio of 100% between the second negative pressure passage 64 and the negative pressure passage 71 so as to force the valve stem 58 of the first exhaust gas recirculation valve 54 back to retract as much as possible, thereby completely opening the second EGR branch passage 53. Owing to the arrangement of the first and second exhaust gas recirculation valves 54 and 55 having different operational characteristics in parallel to each other in the EGR passage 50, it is enabled that the amount of exhaust gas that is recirculated is, on one hand, regulated quickly with a high response over a wide range by the second exhaust gas recirculation valve 55 and, on the other hand, regulated finely with high accuracy and high resolution by the first exhaust gas recirculalion valve 54. As described above, exhaust gas is easily recirculated into the intake air passage 7 through the exhaust ga recirculation passage 50 by reducing the nozzle area of the variable geometry turbocharger 20. This is because, since the exhaust gas recirculation passage 50 at its upstream end opens to the exhaust gas passage 9 upstream from the movable vanes 24, and hence the nozzle 25, or a position where the turbine wheel 22 is located, reducing the nozzle area of the nozzle 25 of the variable geometry turbocharger 20 causes resistance against an exhaust gas stream in the exhaust gas passage 9. Accordingly, even when the first and second exhaust gas recirculation valves 54 and 55 are at the same valve lifts, the amount of exhaust gas that is admitted tends to increase more for smaller a nozzle area as compared with a large nozzle area.

The diesel engine 1 is controlled by a control unit 100 which performs, besides fuel injection control for regulating an amount of fuel that is sprayed into the combustion chamber or the pre-combustion chamber 5 through the fuel injector 4 and a fuel injection timing according to engine operating conditions., at least supercharging pressure control (VGT control) through the duty solenoid valve (VGT duty valve) 37 and exhaust gas recirculation control through the duty solenoid valve 63, on-off solenoid valve 65, negative pressure regulation duty solenoid valve 67 and atmospheric pressure regulation duty solenoid valve 69. The supercharging pressure control and exhaust gas recirculation control are implemented on the basis of parameters represented by signals from various sensors. In this regards, the control unit 100 receives signals including at least a signal representative of a pressure of intake air (supercharging pressure) that is detected by a pressure sensor 81 disposed in the intake air passage 7, a signal representative of a temperature of intake air that is detected by a temperature sensor 82 disposed in the intake air passage 7, a signal representative of a negative pressure supplied to the upper vacuum chamber 34a of the vacuum operated actuator 30 that is detected by a pressure sensor 83 disposed in the negative pressure passage 37, a signal representative of a valve lift of the first exhaust gas recirculation valve 54, and hence an opening of the first EGR branch passage 52, that is detected by a valve lift sensor 84, a signal representative of a temperature of engine cooling water that is detected by a temperature sensor 85, a signal representative of an engine speed that is detected as a rotational angle of a crankshaft of the diesel engine 1 by an electromagnetic type of speed sensor 86, a signal representative of a travel of an accelerator pedal (not shown) that is detected by a travel sensor or a position sensor 87, a signal representative of a temperature of an engine compartment that is detected by a temperature sensor 88, and a signal representative of an atmospheric pressure that is detected by a built-in pressure sensor 89.

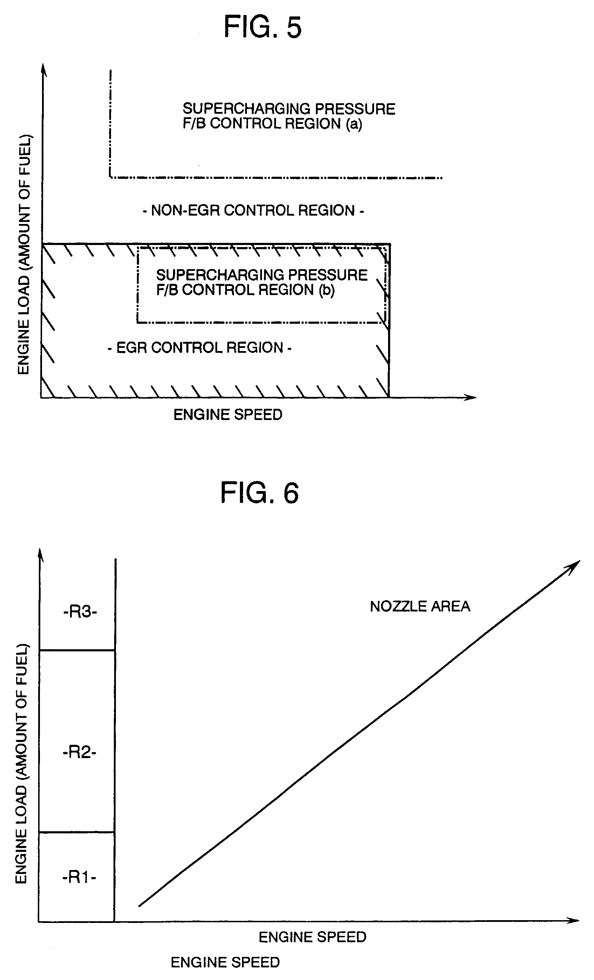

The exhaust gas recirculation control is implemented in an ordinary engine operating region from a state where the engine operates with lower speeds and lower loads (smaller amounts of fuel) to a state where the engine operates with moderate speeds and moderate loads (moderate amounts of fuel) as shown as exhaust gas recirculation (EGR) control region in Figure 5. The exhaust gas recirculation control is of feedback control which controls an amount of exhaust gas recirculation by bringing a practical valve lift of the first exhaust gas recirculation valve 54 that is detected by the valve lift sensor 84 to a target valve lift. However, the exhaust gas recirculation control is suspended in an accelerative engine operating region where the engine operates with higher speeds and higher loads as shown as an exhaust gas recirculation suspension (non-EGR) region in Figure 5. This is because, during engine acceleration, it is necessary to increase quickly the amount of intake air with an increase in the amount of fuel injection and, as a matter of course, it is necessary to decrease quickly the amount of exhaust gas that is admitted by suspending the exhaust gas recirculation control. In this instance, the exhaust gas recirculating control is suspended also during decelerative engine operating region.

In the VGT control, as shown in Figure 6, in order to provide more satisfactory accelerative performance with an increase in engine speed or engine load (an amount of fuel injection), the duty ratio with which the VGT duty solenoid valve 37 is basically increased so as to provide a reduced nozzle area of the nozzle 25, thereby providing a rise in supercharging efficiency of the variable geometry turbocharger 20. However, as indicated by reference signs R1, R2 and R3 in Figure 6, in an engine operating region of lower speeds, the duty ratio is decreased with an increase in engine load so as to provide an increased nozzle area of the nozzle 25. That is, the VGT duty solenoid valve 37 is energized, for example, with a duty ratio of 100% so as to provide the possibly smallest nozzle area in the engine operating region of lower engine speeds and lower engine loads (R1) including idling conditions, a duty ratio of 50% so as to provide a middle size nozzle area in a moderate engine operating region of lower engine speeds and moderate engine loads (R2), and a duty ratio of 0% so as to provide the possibly greatest nozzle area in the engine operating region of lower engine speeds and higher engine loads (R3). With the variable geometry turbocharger control, while the exhaust gas is partly recirculated through the exhaust gas recirculation valve 54, 55 in the engine operating region of lower engine speeds and lower engine loads (R1), the variable geometry turbocharger 20 reduces the nozzle area of the nozzle 25 with an effect of causing resistance against an exhaust gas stream, so as to make the exhaust gas in the exhaust gas passage 9 hard to be expelled downstream, thereby rising the pressure of exhaust gas in the exhaust gas passage 9 between the exhaust ports of the diesel engine 1 and the movable vanes 24 or the nozzle 25 of the variable geometry turbocharger 20 or the position where the turbine wheel 22 is located. As a result, propulsion force for circulating the exhaust gas into the intake air passage 7 through the EGR passage 50 is risen, so that a desired amount of exhaust gas recirculation is ensured by the use of the variable geometry turbocharger 20 without providing the diesel engine 1 with, for example, a separate throttling element such as a throttle valve operative to generate a negative pressure in the intake air passage 7. Since a small amount of exhaust gas is discharged in the engine operating region of lower engine speeds and lower engine loads (R1), the variable geometry turbine 21 does not permit the turbine wheel 22 to overspeed even when reducing the nozzle area of the nozzle 25, so as to prevent itself from increasing its supercharging efficiency in excess. While the diesel engine 1 operates in the engine operating region of lower engine speeds and higher engine loads (R3), the variable geometry turbine 21 increases the nozzle area of the nozzle 25. Accordingly, when an engine operation changes to the engine operating region of lower engine speeds and higher engine loads (R3) from the engine operating region of lower engine speeds and lower engine loads (R1) due to stepping down the accelerator pedal on a vehicle start, the nozzle 25 open from their closed positions, as a result of which the exhaust gas tends to be expelled easily downstream in the intake air passage 9, the turbine 29 is prevented from increasing its rotational speed quickly, so as thereby to eliminate the possibility that the turbine wheel 22 overspeeds and the turbine shaft 22a seizes and, in consequence, guarantee the reliability of the variable geometry turbocharger 20. In a short period of time at the beginning of stepping down the accelerator pedal on a vehicle start, although the nozzle 25 are not completely changed from a closed state to an open state, an increased amount of exhaust gas is recirculated and works as initial driving force for causing a rise in rotational speed of the turbine wheel 22, so that, since the nozzle 25 subsequently open more greatly, the turbine wheel 22 rotates continuously with sufficiently large inertia even though the driving force acting on the turbine is not increased so much and, in consequence. This prevents an occurrence of significant aggravation of accelerative performance of the diesel engine 1. In particular, an ensured amount of exhaust gas is recirculated in the engine operating region of lower engine speeds and lower engine loads (R1), i.e. idling conditions that occur so often, and reliable operation of the variable geometry turbocharger 20 is guaranteed in engine operating conditions such as vehicle starts from idling conditions that occur so often, both of which yield significantly desirable effects.

Further, in the moderate engine operating region of lower engine speeds and moderate engine loads (R2), the variable geometry turbocharger 20 opens the nozzle 25 to a nozzle area between those that are provided in the engine operating region of lower engine speeds and lower engine loads (R1) and in the engine operating region of lower engine speeds and higher engine loads (R3), respectively. Accordingly, on the way of change in engine operating condition from the engine operating region of lower engine speeds and lower engine loads (R1) to the engine operating region of lower engine speeds and higher engine loads (R3) following a vehicle start, the nozzle 25 change in nozzle area via a middle size nozzle area, so that the nozzle 25 increase their area in steps with an effect of mitigating a sharp change in nozzle area from their closed state to open state at one stretch. As a result, an increasing rate of driving force acting on the turbine wheel 22 is lowered in steps, so as to prevent or significantly reduce unpleasant feelings of drive. In this instance, although the engine operating region of lower engine speeds is divided into three regions (R1), (R2) and (R3) for lower, moderate and higher engine loads as shown in Figure 6, it may be divided into more than three regions of engine loads. The more the number of regions of engine loads into which the engine operating region of lower engine speeds is divided, the more gently the nozzle 25 increase their area on the way of change in engine operating condition from the engine operating region of lower engine speeds and lower engine loads (R1) to the engine operating region of lower engine speeds and higher engine loads (R3) following a vehicle start, so that the nozzle 25 increase more gently from their closed state to open state. As a result, an increasing rate of driving force acting on the turbine wheel 22 is lowered smoothly, so as to prevent or more significantly reduce unpleasant feelings of drive

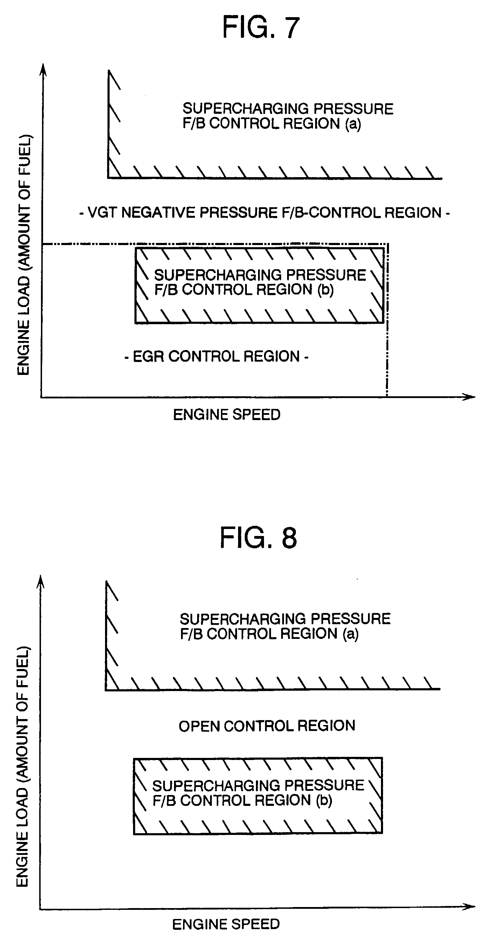

The supercharging pressure control is performed by feedback controlling a nozzle area of the nozzle 25 of the variable geometry turbocharger 20 so as to provide a target supercharging pressure according to engine operating conditions such as engine speeds and engine loads. In particular, as shown in Figure 7, feedback control of nozzle area is implemented so as to bring a practical supercharging pressure that is detected by the pressure sensor 81 to a target supercharging pressure in engine operating regions defined for supercharging pressure feedback control, namely an engine operating region of extremely higher engine loads (a) and an engine operating region of moderate engine speeds and moderate engine loads (b). This is because, since a target supercharging pressure is set to an extremely high level according to extremely high engine loads (extremely large amounts of fuel injection) in the engine operating region of extremely higher engine loads (a), if control of the variable geometry turbocharger 20 based on a practical supercharging pressure in the intake passage 7 is inaccurate, the supercharging pressure becomes too high to prevent the turbine wheel 22 from overspeeding and/or the turbine shaft 22a from seizing due to an overspeed of the turbine wheel 22, which always yields aggravation of the reliability of the variable geometry turbocharger 20. Further, regarding the engine operating region of moderate engine speeds and moderate engine loads (b), since it is involved in an engine operating region for implementation of the exhaust gas recirculation (EGR) control region as shown by a double-dotted line in Figure 7, if control of the variable geometry turbocharger 20 based on a practical supercharging pressure in the intake passage 7 is inaccurate, fluctuations occur in the amount of exhaust gas that is recirculated through the exhaust gas recirculation (EGR) passage 50, which makes it hard to feedback control the amount of exhaust gas recirculation and, in consequence, causes fluctuation in emission level of NOx.

On the other hand, in the remaining engine operating region of ordinary engine speeds including lower engine speeds for negative pressure feedback control for the variable geometry turbocharger 20 (VGT negative pressure feedback region), VGT negative pressure control is implemented, in place of the supercharging pressure control, by feedback controlling a nozzle area of the nozzle 25 of the variable geometry turbocharger 20 so as to bring a practical supercharging pressure that is detected by the pressure sensor 83 to a target supercharging pressure. This is because, although the supercharging pressure feedback control is superior in accuracy, it has a relatively large time lag until causing an increase or a decrease in practical supercharging pressure in the intake air passage 7 and is, in consequence, defective in responsiveness. The time lag is caused due to a change in turbine efficiency resulting from that the nozzle 25 is regulated by a change in negative pressure supplied to the vacuum chamber 34 of the vacuum operated actuator 30 on the basis of a duty ratio for the VGT duty solenoid valve 37 which is determined so as to cancel a pressure difference between the practical and target supercharging pressures. An occurrence of such a time lag is a matter of concern in an engine operating region of lower engine speeds where a small amount of exhaust gas is generated and, in consequence, an increase or a decrease in practical supercharging pressure tends to be slow. Besides, because the pressure difference between practical and target supercharging pressures is calculated on the basis of a practical supercharging pressure corresponding to a duty ratio that is generated for the VGT duty solenoid valve 37 a relatively long time ago, a feedback control value becomes too large, the control I apt to overshoot and cause hunting which is always undesirable for stable control. The supercharging pressure generated in the intake air passage 7 varies widely, due to which the control is apt to cause hunting. Since the unstableness of control causes fluctuations in engine output, it is especially a matter of concern in an ordinary engine operating region during stable cruising. On the other hand, although a direct target of the supercharging pressure control (VGT control) is the VGT duty solenoid valve 37 and the final result of the control is revealed as a supercharging pressure in the intake air passage 7, nevertheless, there is an inter relationship, though indirect, between a VGT negative pressure that the VGT duty solenoid valve 37 generates directly and a nozzle area of the nozzle 25 that varies with the VGT negative pressure or a supercharging pressure that the variable geometry turbocharger 20 generates. Accordingly, the variable geometry turbocharger 20 can be feedback controlled on the basis of the in place of the practical supercharging pressure m the intake air passage 7 which is the final result of the variable geometry turbocharger control, the VGT negative pressure that the VGT duty solenoid valve 37 generates directly in the negative pressure (VGT negative pressure) passage 36 in place of the practical supercharging pressure in the intake air passage 7 as the final result of the variable geometry turbocharger control. In this case, since that the VGT duty solenoid valve 37 generates directly the VGT negative pressure, there is no large time lag such as occurring in the supercharging pressure feedback control, besides variations in VGR negative pressure level is small as compared with those in supercharging pressure, so that defect in responsiveness and unstableness of the control are eliminated On the grounds of the above, the VGT negative pressure control, which is inferior in accuracy but superior in responsiveness and stability, is implemented region in place of the supercharging pressure feedback control in the engine operating region of lower engine speeds and the ordinary engine operating.

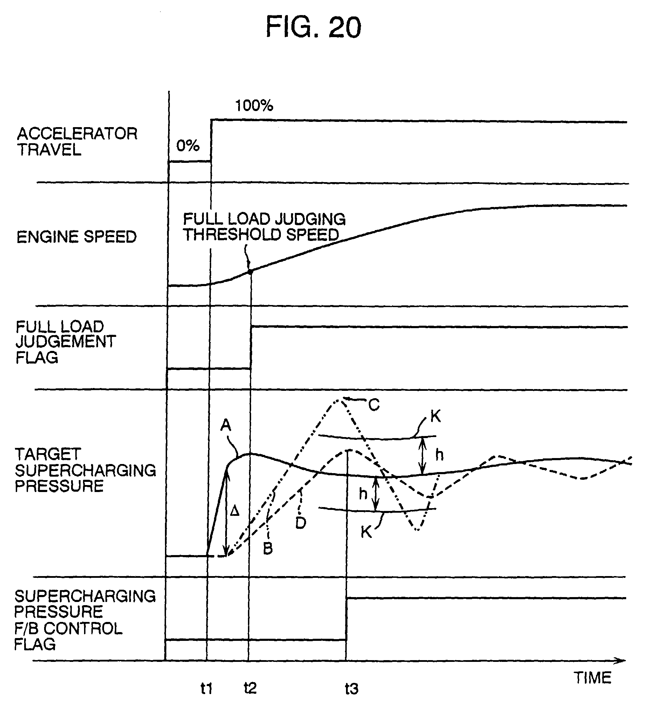

Which control is implemented between the supercharging pressure feedback control and the negative pressure feedback control depends upon control characteristics that engine operating condition requires and characteristics that the respective control is possessed of. Accordingly, in place of selectively implementing the two feedback control, it may be acceptable to implement both feedback control in, for example, the case where the characteristics of both or either one of the two feedback control are required Otherwise, as shown as an open control region in Figure 8, in an engine operating region including the lower speed engine operating region and ordinary engine operating region but excluding the engine operating region of extremely higher engine loads (a) for the supercharging pressure feedback control where the VGT control is required to be performed with high accuracy and the engine operating region of moderate engine speeds and moderate engine loads (b) for the supercharging pressure feedback control which overlaps the engine operating region for the exhaust gas recirculation (EGR) control, open or feedforward control may be implemented in place of the feedback control. In the case where the open control is implemented, there possibly occurs a problem accompanying a switch in control mode of the variable geometry turbocharger 20 upon transition of engine operating condition from the open control engine operating region to the feedback control engine operating region, more specifically upon a transition of engine operating condition to the feedback control region of higher and fill engine loads (a) from an engine operating region of lower engine loads such as when a demand for acceleration which needs a harp increase in accelerator travel occurs. That is, the open control regulates a nozzle area of the nozzle of the variable geometry turbocharger 20 so as to develop a basic target supercharging pressure according to engine operating conditions such as engine speeds and engine loads, while feedback control regulates a nozzle area of the nozzle of the variable geometry turbocharger 20 so as to cancel a pressure difference between a practical and a target supercharging pressure. As shown by a solid line A in a time chart illustrated in Figure 20, a target supercharging pressure for the feedback control is calculated immediately at the beginning of an entry into the feedback control region of higher and full engine loads (a) from an engine operating region of lower engine loads as a result of stepping down the accelerator pedal for acceleration, while, as shown by a double dotted line B in Figure 32, a practical supercharging pressure rises slowly due to a response delay of the VGT control, as a result of which a pressure difference (Δ) between the practical and the target supercharging pressure at the beginning of implementation of the feedback control (t11) is considerably large. As a result, a feedback control value becomes large in excess in order to cancel the pressure difference, so that the practical supercharging pressure is apt to overshoot as shown by a reference sign C in Figure 20, as a result of which the turbine 21 overspeeds and the turbine shaft 22a possibly seizes, so as to cause aggravation of the reliability of the variable geometry turbocharger 20. Further, the feedback control is apt to cause hunting, so as to lose control stability and let the driver have an unpleasant driving feeling due to fluctuation in engine output even during acceleration. For this reason, the control is programmed and adapted such that the open control is left effective without switching to the feedback control immediately upon an entry into the feedback control region of higher and full engine loads (a) from an engine operating region of lower engine loads, for example, during acceleration. With the open control, as shown by a broken line D in Figure 20, the feedback control is effected at a point of time (t13) at which the practical supercharging pressure reaches a level within a specified pressure difference (h) from the target supercharging pressure for the feedback control. As a result, as shown in Figure 20, when the accelerator pedal is stepped down at a point of time (t11) accompanying a sharp increase in accelerator opening, and as a result of which the diesel engine 1 attains a speed exceeding a specified threshold speed for a judgement of full load engine operating condition at a point of time (t12), the feedback control, which is performed on the basis of a supercharging pressure difference (Δ), is not implemented at an entry into the feedback control engine operating region at the point of time (t11) even though the supercharging pressure difference (Δ) is large, so as to prevent the practical supercharging pressure from overshooting and the control from hunting, Since the feedback control commences at the point of time (t13) at which the pressure difference (Δ) falls within the specified pressure difference (h) between the target supercharging pressure for the feedback control and a threshold pressure (k) for a judgement of commencement of the feedback control, the feedback control value is prevented from becoming large in excess in order to cancel the pressure difference (Δ) which is within the specified pressure difference (h) and relatively small, so as to prevent the practical supercharging pressure from overshooting and the control from hunting, which eliminates or significantly ease problems relating to aggravation of the reliability of the variable geometry turbocharger 20 and stability of the control and fluctuations in engine output. Though the open control remains effective for the period between the points of time (t11) and (t12), the nozzle 25 of the variable geometry turbocharger 20 may be controlled to open a little more rather in that period than ordinary so as to cause the practical supercharging pressure as shown by the broken line D to rise slowly a little, which prevents the practical supercharging pressure from overshooting the threshold pressure (k) for the judgement of commencement of the control and the turbine 21 from overspeeding and guarantees stabilization of the control. Governing such that the management that the control of the variable geometry turbocharger 20 is not switched to the feedback control immediately after a transition of engine operating condition to the engine operating region of extremely higher engine loads (a) or the engine operating region of moderate engine speeds and moderate engine loads (b) is nothing but restraining or easing the feedback control. As a technique for restraining the feedback control, it is acceptable to prohibit implementation of the feedback control, to void a feedback control value though the feedback control is allowed to be implemented, or to lower a control gain.

The control unit 100 further performs VGT negative pressure learning control while a temperature of the diesel engine 1 or the engine compartment is higher than a specified temperature and stable after warming-up during idling or while a negative pressure generated by the engine operated vacuum pump 38 is stable at a specified level due to stabilization of engine speed after idling-up. Specifically, incases where there are fluctuations in VGT negative pressure supplied to the vacuum operated actuator 30 even when the VGT duty solenoid valve 37 is energized with the same duty ratio because of an individual difference of the VGT duty solenoid valve 37, variable geometry type of turbocharger 20 is hard to develop a target supercharging pressure due to irregularity of controlled nozzle areas of the nozzle 25. In order to eliminate the problem, the duty ratio for the VGT duty solenoid valve 37 suitable for developing a given target supercharging pressure is determined in consideration with an error of a negative pressure that is generated by VGT duty solenoid valve 37 energized with a predetermined specific duty ratio from a standard negative pressure that is previously given. In such a case, if circumferential environments are not fixed during implementation o the VGT negative pressure learning control, the learned results are also irregular so as to lower learning accuracy. For this reason, the VGT negative pressure learning control is implemented only while an ambient temperature of the VGT duty solenoid valve 37 such as a temperature of the diesel engine 1 or the engine compartment is substantially fixed and unchangeable and the VGT duty solenoid valve 37 is electrically stable or while a negative pressure that is generated as a source negative pressure of a VGT negative pressure by the engine operated vacuum pump 38 is stable. Further, since the VGT duty solenoid valve 37 energized with a given duty ratio regardless of engine operating conditions, it generates a supercharging pressure unrelated the engine operating conditions. Accordingly, in order to lower an unpleasant feeling of the driver, the VGT negative pressure learning control is implemented only during idling where a small amount of exhaust gas is discharged and a supercharging pressure is low and less influential.

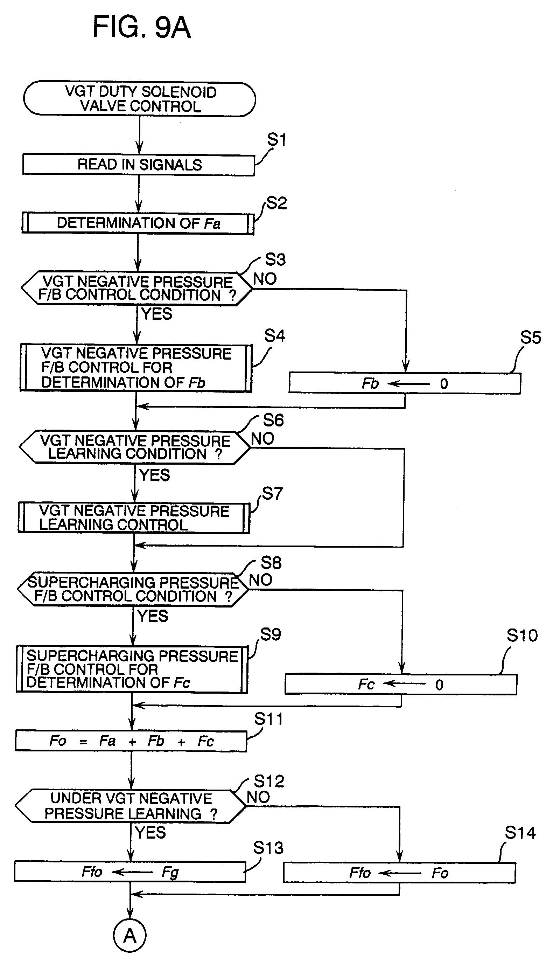

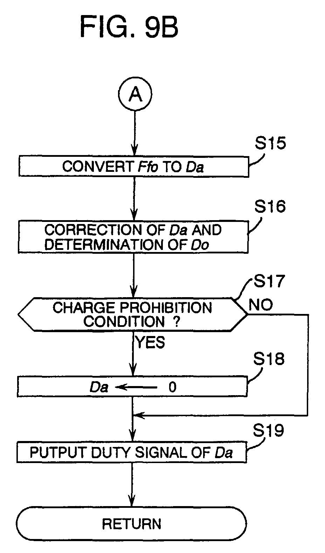

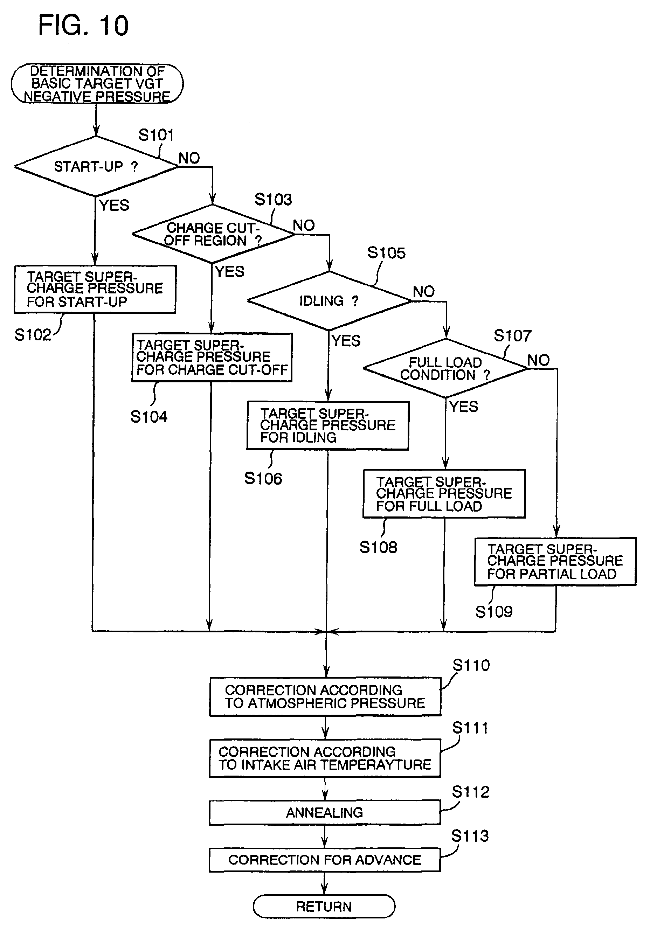

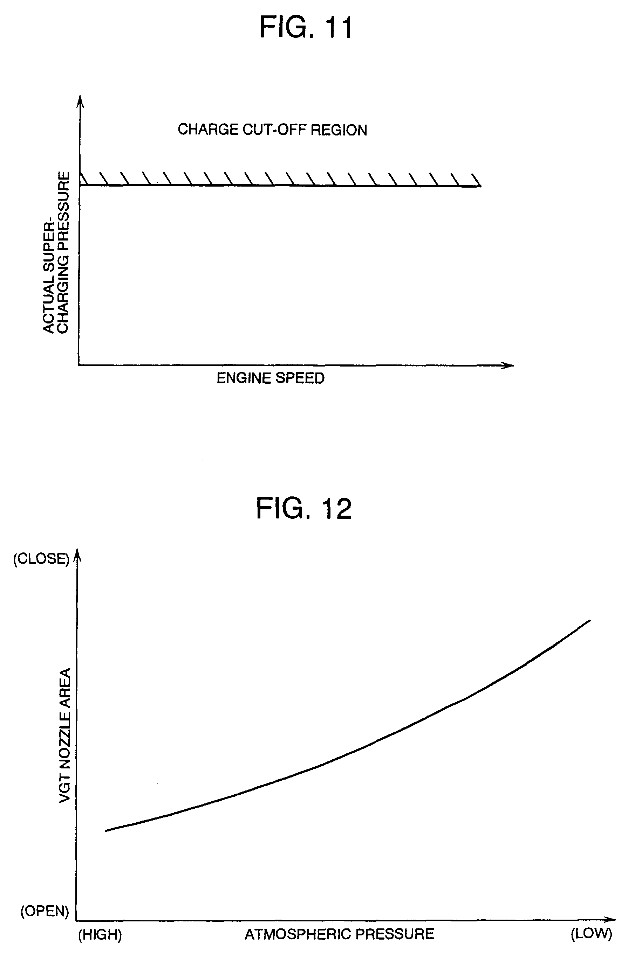

Figures 9A and 9B are respective parts of a flow chart illustrating a main routine of control of the VGT duty solenoid valve 37. When the sequence logic commence, after reading in signals from the various sensors at step S1, a basic target VGT negative pressure $Fa$, that is supplied to the vacuum chamber 34 of the vacuum operated actuator 30, is determined at step S2. Determination of the basic target VGT negative pressure $Fa$ is performed by a subroutine illustrated by a flow chart shown in Figure 10. When the basic target VGT negative pressure determination subroutine is called for, basic target negative pressures are determined for various engine operating conditions through steps 101 to 109. The term "charge cut-off region" as used in the basic target VGT negative pressure determination subroutine shall mean and refer to a engine operating region in which a supercharging pressure in the intake air passage 7 is extremely high regardless of engine speeds as shown in Figure 11 and wherein the variable geometry turbocharger 20 definitely suspends generation of a supercharging pressure as long as the supercharging pressure is in the charge cut-off region.

Referring now to Figure 10 which is a flow chart illustrating a subroutine of the basic target VGT negative pressure determination control. When the engine 1 starts up at step S101, a start up target negative pressure is determined at step S102. When a supercharging pressure is in the charge cut-off region at step S103, a charge cut-off target negative pressure is determined at step S104. A VGT negative pressure that causes the nozzle 25 of the variable geometry turbocharger 20 to open to its full position is employed for the start up target negative pressure and the charge cut-off target negative pressure. When the engine 1 is idling at step S105, an idling target negative pressure is determined at step S106. A VGT negative pressure that causes the nozzle 25 of the variable geometry turbocharger 20 to close to its full close position is employed for the idling target negative pressure. When the engine 1 operates with a full load S107, a full load target negative pressure is determined at step S108. A VGT negative pressure that causes the nozzle 25 of the variable geometry turbocharger 20 to close to its full close position is employed for the full load target negative pressure. When the engine is in an engine operating conditions other than the above conditions, i.e. operates with partial loads, at step S107, a partial load target negative pressure is determined at step S109. A VGT negative pressure that causes the nozzle 25 of the variable geometry turbocharger 20 to open to some extent is employed for the partial load target negative pressure.

sure. Because employing the target negative pressures according to engine operating conditions, a given amount of exhaust gas that is recirculated is ensured in the exhaust gas recirculation (EGR) control region of lower engine speeds and lower engine loads with an effect of smoothly controlling an air-fuel ratio. Moreover, besides aggravation of the reliability of the variable geometry turbocharger 20 at a vehicle start is eliminated, an unpleasant feeling is eased.

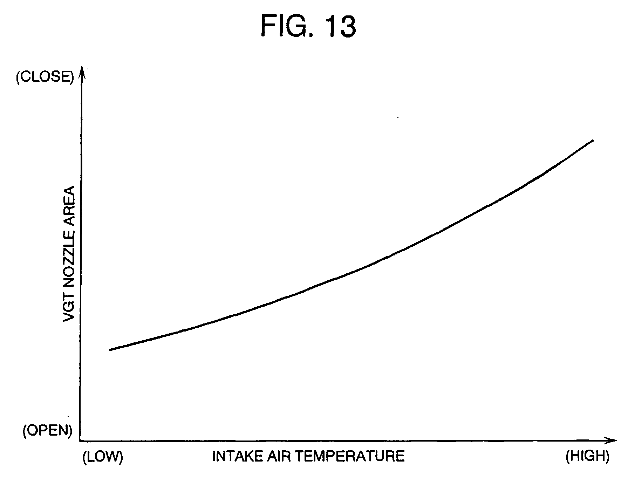

After the determination of a target negative pressure, the basic target negative pressure is corrected according to an atmospheric pressure at step S110. The basic target negative pressure correction is carried out by changing a nozzle area smaller so as to increase an amount of air that is supplied tot he combustion chamber such that the lower the atmospheric pressure is, the more the amount of air increases, such as shown in Figure 12. Subsequently, the basic target negative pressure is further corrected according to temperatures of intake air at step S111. The basic target negative pressure correction is carried out by changing a nozzle area larger so as to increase an amount of air that is supplied tot he combustion chamber such that the higher the intake air temperature is, the more the amount of air increases such as shown in Figure 13. After the corrections of the basic target negative pressure at steps S110 and S111, the basic target negative pressure is weighted averaged processed in consideration with its past record in order to restrain a sharp change in the basic target negative pressure. The weighted average processing is performed by the following expression:

$$FU1 = K1 \times FU1(i\text{-}1) + (1\text{-}K1) \times FU0(i)$$

where

FU1 is the latest target negative pressure after weighted average processing,
FU(i-1) is the last e target negative pressure after weighted average processing,
FU0 is the latest target negative pressure before weighted average processing, i.e. the basic target negative pressure after the atmospheric pressure and temperature correction;
K1 is a coefficient between 0.5 and 1

Finally, the target negative pressure is corrected for advancing at step S113. The weighted averaging correction is conducted to determine a basic target VGT negative pressure $Fa$ with the aim to restrain or ease a response delay of a change in a supercharging pressure and performed by the following expression:

$$FU2 = [FU1(i) - K2 \times FU1(i\text{-}1)]/(1\text{-}K2)$$

where

*FU2* is the latest target negative pressure after advancing correction;

*FU1(i)* is the latest target e negative pressure after weighted average processing;

*FU0(i -1)* is the last target negative pressure after weighted average processing;

K2 is a coefficient between 0 and 0.5

Then, the final step orders return to the main routine, after the step in the main routine calling for the basic target VGT negative pressure determination subroutine.

Referring back to the main routine in Figure 9A, a decision is made at step S3 as to whether a condition for implementation of the VGT negative pressure feedback control (VGT negative pressure control condition) is satisfied. When the VGT negative pressure control condition is satisfied, a subroutine of the VGT negative pressure feedback control is called for to determine a VGT feedback control value (a VGT feedback negative pressure *Fb*) at step S4. On the other hand, when the VGT negative pressure control condition is still unsatisfied, the VGT feedback negative pressure *Fb* is set to a value of zero (0) at step S5. The VGT negative pressure control condition is, for example, such that an engine operating condition falls in the VGT negative pressure feedback region shown in Figure 7 and changing rates of both basic target negative pressure *Fa* and practical VGT negative pressure are small.

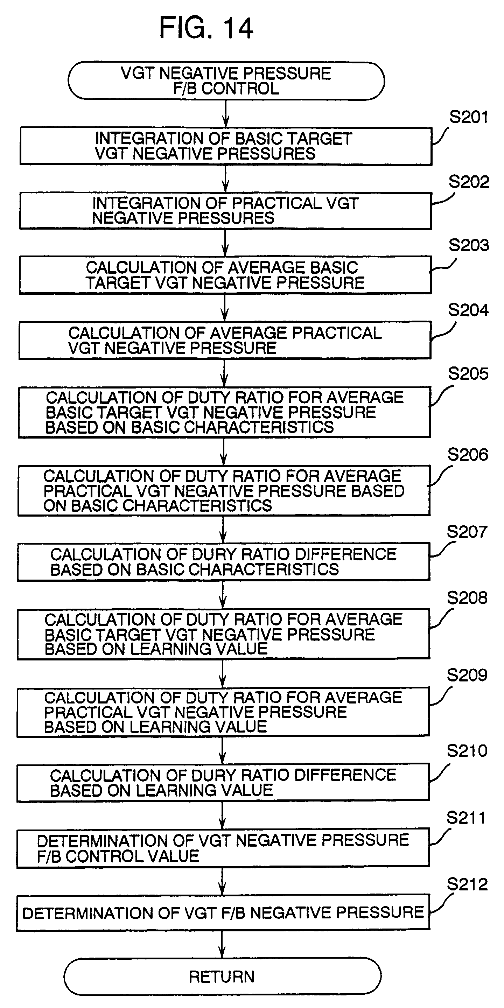

Referring now to Figure 14 which is a flow chart illustrating a subroutine of the VGT negative pressure feedback control, after integrating the basic target VGT negative pressures determined up to the latest control cycle and the practical VGT negative pressures detected up to the latest control cycle at steps S201 and S202, respectively, an average basic target VGT negative pressure and an average practical VGT negative pressure are calculated at step S403 and S404, respectively. That is to say, by means of integration of both basic target VGT negative pressure and practical VGT negative pressures, the feedback control value is prevented from sharply varying with an effect of stabilizing the VGT control. Subsequently, duty ratios are calculated using the average basic target VGT negative pressure and the average practical VGT negative pressure, respectively, on the basis of basic characteristics as a standard for the VGT negative pressure learning control at steps S205 and S206, respectively. Accordingly, the duty ratios that are calculated at steps S205 and S206 have not incorporated a variation in VGT negative pressure due to an individual variation of the VGT duty solenoid valve 37. Subsequently, a difference between the duty ratios (a duty ratio difference on the basis of the basic characteristic) is calculated at step S207, and duty ratios are calculated from the average basic target VGT negative pressure and average practical VGT negative pressure, respectively, on the basis of learning values at step S208 and S209, respectively. The term "learning value" as used herein shall mean and refer to a leaning correction value (a difference from a basic VGT negative pressure that is predetermined). Accordingly, the duty ratios that are calculated at steps S208 and S2069have incorporated a variation in VGT negative pressure due to an individual variation of the VGT duty solenoid valve 37. Subsequently, after calculating a difference between the duty ratios (a duty ratio difference on the basis of learning value) at step S210, a VGT negative pressure feedback control value is determined on the basis of the duty ratio differences on the basis of basic characteristic and the duty ratio difference on the basis of the learning value at step S211. Finally, at step S212, a VGT feedback negative pressure *Fb* is determine by reflecting a past record in the VGT feedback negative pressure in order to prevent a sharp change in the VGT negative pressure feedback control value. The VGT feedback negative pressure *Fb* is given by the following expression:

$$FBS(i) = FBS(i-1) + K3 \times FB$$

where

*FBS(i)* is the latest VGT feedback negative pressure *Fb*;

*FBS(i-1)* is the last VGT feedback negative pressure *Fb*;

*FB* is the VGT negative pressure feedback control value;

K3 is a coefficient between 0 and 0.5

Then, the final step orders return to the main routine, after the step in the main routine calling for the VGT negative pressure feedback control subroutine.

Referring back to the main routine in Figure 9A, a decision is made at step S6 as to whether a condition for implementation of the VGT negative pressure learning control (VGT negative pressure learning condition) is satisfied. When the VGT negative pressure learning condition is satisfied, a subroutine of the VGT negative pressure learning control is called for at step S7. The VGT negative pressure learning condition is, for example, such that the engine 1 is idling for a specified period of time, the engine cooling water is at a temperature higher than a specified temperature, the atmospheric pressure is at a fixed standard, and the engine compartment is at a temperature higher than a specified temperature. When the VGT negative pressure learning condition is satisfied, the VGT negative pressure learning control is implemented in a state where a high learning accuracy is ensured owing to stable electrical characteristics of the VGT duty solenoid valve 37 and stable negative pressure that is generated by the engine operated vacuum pump 38 and in a state where the driver has no unpleasant driving feeling because of less fluctuation in engine output as well.

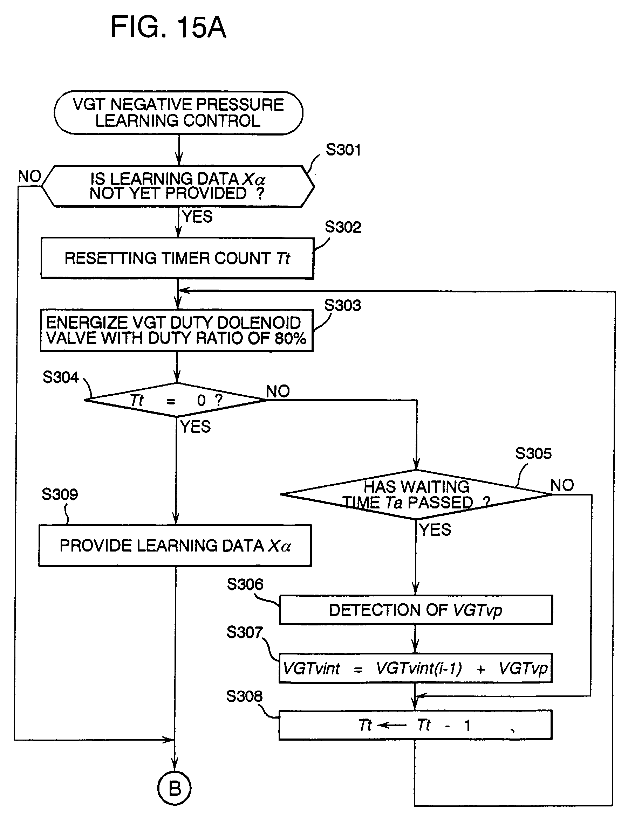

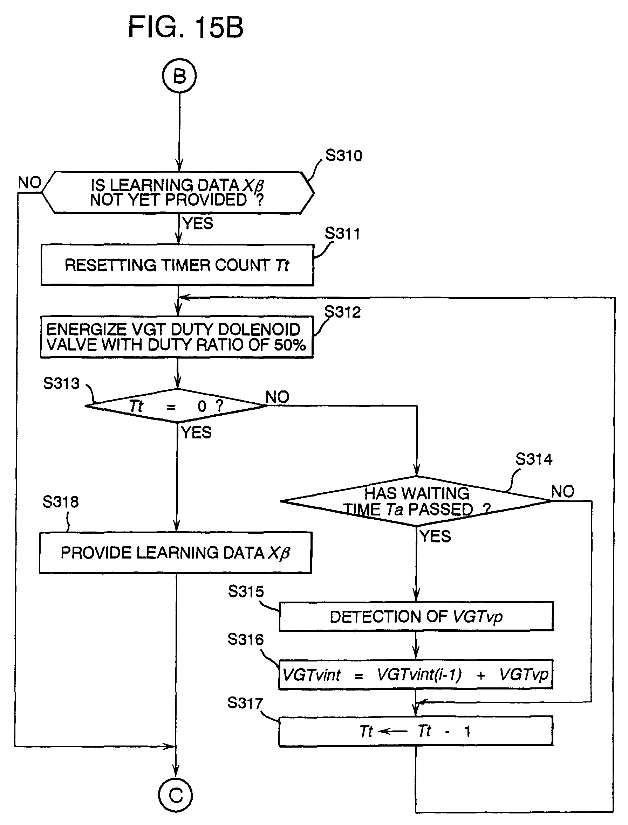

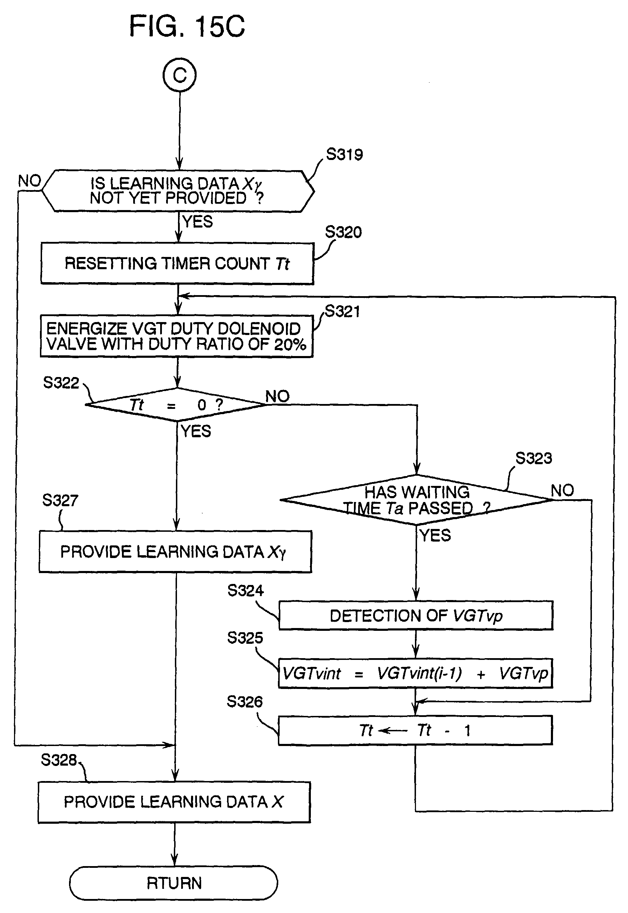

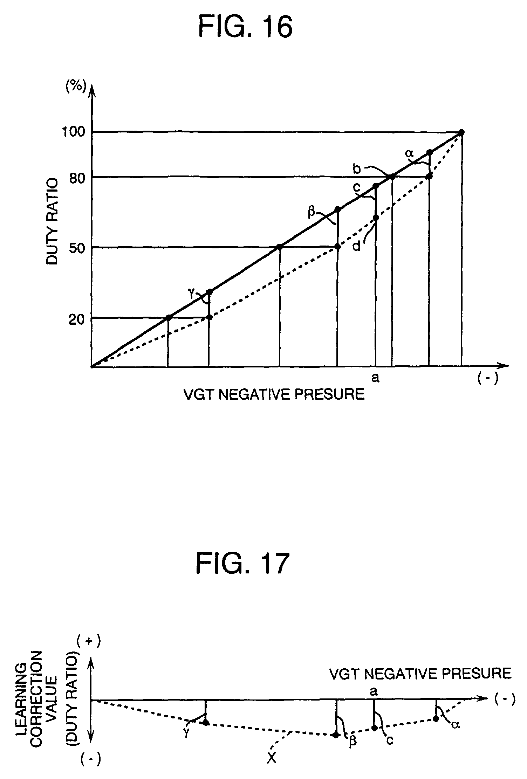

Figures 15A to 15C are a flow chart illustrating a subroutine of the VGT negative pressure learning control. In the VGT negative pressure learning control, specific learning duty rates of for example 80%, 50% and 20% are preselected as shown in Figure 16. Learning is implemented with respect to the respective duty ratios through steps S301 to S309, steps S310 to S318 and steps S319 to S327, respectively, to obtain learning values $\alpha$, $\beta$ and $\gamma$, and then, learning data X over possibly available duty ratios is drawn up by interpolating each adjacent learning values as shown by a broken line in Figure 17at step S328. The learning duty ratios are not limited to the above values and may be of, for example, 100%, 50% and 12.5%.

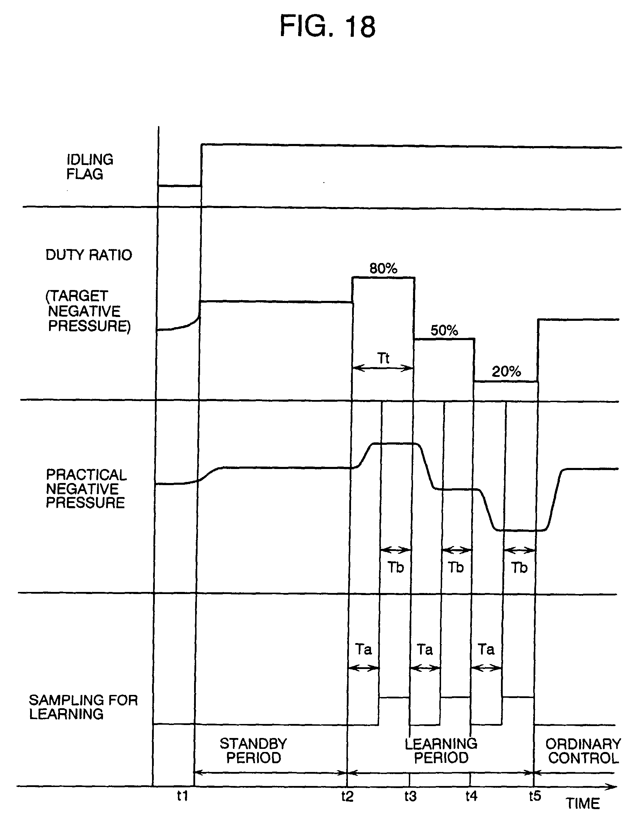

As shown in a time chart in Figure 18, the VGT negative pressure learning control holds itself in readiness for a specified standby period of time until a point of time (t2) even when the engine is detected to be in an idling condition at a point of time (t1). The standby period is necessary for the engine 1 to satisfy the VGT negative pressure learning condition that the specified period of time has passed from an entering an idling condition, the engine cooling water is at a temperature higher than the specified temperature, and the engine compartment is at a temperature higher than the specified temperature. After a lapse of the standby period, a decision is made at step S301 as to whether learning data $X\alpha$ relating to the learning duty ratio of 80% is not yet provided. The learning data $X\alpha$ is provided on the basis of a learning value $\alpha$ at step S309. When learning data $X\alpha$ is still not yet prepared, after resetting a timer count $Tt$ to a preset time of, for example, four seconds at step S302, a duty signal is output to energize the VGT duty solenoid valve 37 with the learning duty ratio of 80% at step S303. Subsequently, a decision is made at step S304 as to whether the timer count $Tt$ has been counted down to 0 (zero), in other words, whether the VGT duty solenoid valve 37 is continuously applied with the duty signal for four seconds. When the timer count $Tt$ is not yet counted down to 0 (zero), a decision is made at step S305. as to whether a specified waiting time $Ta$ of; for example, two seconds has passed after outputting the duty signal. When the specified waiting time $Ta$ has passed, after detecting a VGT negative pressure $VGTvp$ in the VGT negative pressure passage 36 by the pressure sensor 83 at step S306, an integrated VGT negative pressure $VGTvint$ is calculated by adding the VGT negative pressure $VGTvp$ to the last integrated VGT negative pressure $VGTvint(i-1)$ at step S307. When the specified waiting time $Ta$ does not yet pass at step S305 or subsequently to the calculation of the integrated VGT negative pressure $VGTvint$ at step S307, after changing the timer count $Tt$ by a decrement of 1 (one) at step S308, the sequence logic return to step S303. When the timer count $Tt$ has been counted down to 0 (zero) at step S304, learning data $X\alpha$ is provided by calculating a difference of an average value of the integrated VGT negative pressure $VGTvint$ from the basic VGT negative pressure $VGTvbase$ at step S309. The reason why the detection of a VGT negative pressure $VGTvp$in the VGT negative pressure passage 36 is made not immediately after outputting the duty signal at step S302 but within a period of time Tb (see Figure 18) until the preset time count $Tt$ has passed from after a lapse of the specified waiting time $Ta$ is that, as shown in Figure 18, the VGT duty solenoid valve 37 takes a time until a VGT negative pressure $VGTvp$ changes and levels off after it receives a duty signal. For this reason, the detection of a VGT negative pressure $VGTvp$ is made after stabilization thereof, i.e. in a later half of the period of tine (which is defined by the preset time count $Tt$) for which a duty signal is applied to VGT duty solenoid valve 37.

After providing the learning data $X\alpha$ relating to the learning duty ratio of 80% through steps S301 to S309 that is completed between points of time t2 and t3 in the time chart shown in Figure 18, learning data $X\beta$ and learning data $X\gamma$ relating to the learning duty ratios of 50% and 20%, respectively, are provided on the basis of learning values $\beta$ and $\gamma$, respectively, by a substantially same process through steps S310 to 318 that take place between points of time t3 and t4 and steps S319 to S327 that take place between points of time t4 and t5, respectively. Finally, at step S328, learning data $X$ over possibly available duty ratios is drawn up by interpolating each adjacent learning values $\alpha$, $\beta$ and $\gamma$, and then, as shown by a broken line in Figure 17. As demonstrated in Figures 17 and 18 by way of example, though the VGT duty solenoid valve 37 is energized with a standard duty ratio $\underline{b}$ to generate a VGT negative pressure of a level of $\underline{a}$, as a result of the learning control, the VGT duty solenoid valve 37 necessitates to be energized with a duty ratio $\underline{d}$ decreased by a learned value $\underline{c}$ from the standard duty ratio $\underline{b}$. The final step orders return to the main routine, after the step in the main routine calling for the basic target VGT negative pressure determination subroutine.

Referring back to the main routine in Figure 9A, a decision is made at step S8 as to whether a condition for implementation of the supercharging pressure feedback control (a supercharging pressure feedback condition) is satisfied. When the supercharging pressure feedback condition is satisfied, a subroutine of the supercharging pressure feedback control is called for to determine a feedback control value, i.e. a supercharging pressure feedback negative pressure $Fc$. On the other hand, when the supercharging pressure feedback condition is not yet satisfied, the supercharging pressure feedback negative pressure $Fc$ is reset to 0 (zero), in other words, the supercharging pressure feedback control is made ineffective. In this instance, the supercharging pressure feedback condition is, for example, such that an engine operating condition falls in the engine operating region of extremely higher engine loads (a) or in the engine operating region of moderate engine speeds and moderate engine loads (b) shown in Figure 7 or 8, a changing rate of target negative pressure is small, and a difference between practical and target supercharging pressures is less than the specified pressure difference (h). With the decision, the supercharging pressure feedback control does not commence immediately even when an engine operating condition enters either the engine operating region of extremely higher engine loads (a) or the engine operating region of moderate engine speeds and moderate engine loads (b) but commences after the practical supercharging pressure reaches a level within an extent of the specified pressure difference (h). from the target supercharging pressure, so as to prevent the practical supercharging pressure from overshooting and hunting owing to a smooth switch of control mode upon an entry into the engine operating region of extremely higher engine loads (a) or the engine operating region of moderate engine speeds and moderate engine loads (b), thereby eliminating aggravation of the reliability of the variable geometry turbocharger 20 and stability of the control, and also preventing the engine 1 from causing fluctuations in engine output.

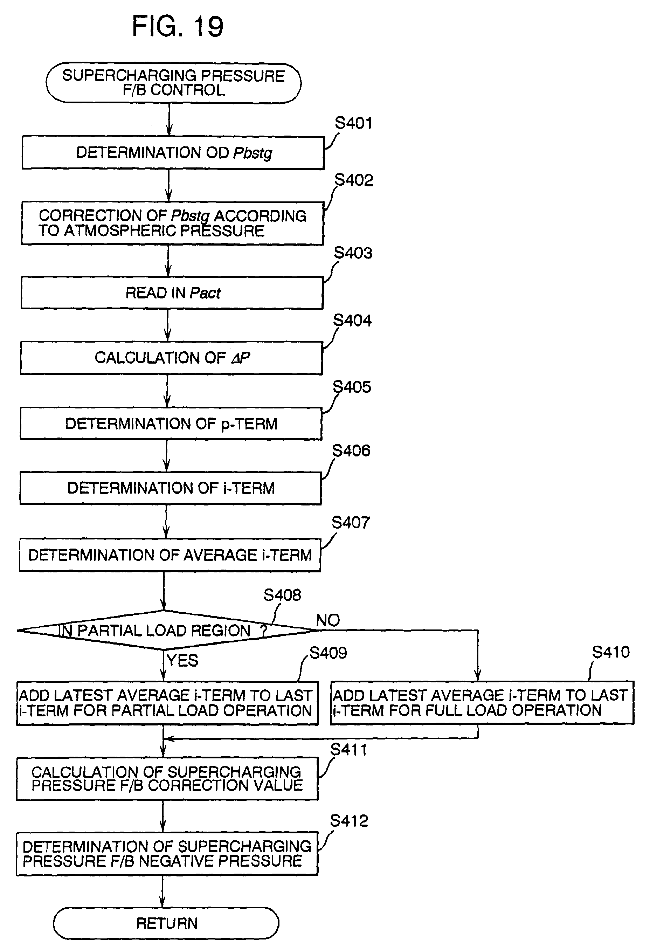

Figure 19 is a flow chart illustrating a subroutine of the supercharging pressure feedback control. In the supercharging pressure feedback control, after determining a basic target supercharging pressure $Pbstg$ at step S401 and making a correction of the basic target supercharging pressure $Pbstg$ according to an atmospheric pressure at step S402, a pniciical supercharging pressure $Pact$ in the intake air passage 7 is read through the pressure sensor 81 in at step S403. Subsequently, after calculating a pressure difference $\Delta P$ between the practical supercharging pressure $Pact$ and basic target supercharging pressure $Pbstg$ after correction at step S404, calculations are consecutively made to determine a proportional term and an integral term of a feedback correction value at steps S405 and S406, respectively, and then, a calculation is made to determine an average of integral terms up to the latest cycle at step S407. Subsequently, a decision is made at step S408 as to whether an engine operating condition falls in the partial load engine operating region (the engine operating region of moderate engine speeds and moderate engine loads) (b). The average integral term is added by an integral term obtained during the last cycle of the supercharging pressure feedback control at a partial load condition when the engine operation condition falls in the partial load engine operating region (b) at step S409 or by an integral term obtained during the last cycle of the supercharging pressure feedback control at a full load condition when the engine operation condition does not fall in the partial load engine operating region (b) but halls in the full load engine operating region (a) at step S410. The resultant integral terms calculated at steps S409 and 410 are clipped by upper and lower limits.

Subsequently, at step S411, a calculation is made to determine a feedback correction value for the supercharging pressure feedback control on the basis of the proportional term calculated at step S405 and the integral term finalized at step S409 or S410. Applying such treatments including averaging, in particular, to the integral term attenuates an influence of a sharp change in feedback control value, so as to reinforce stability of the supercharging pressure feedback control. In this instance, the proportional term, integral term and feedback correction value that are calculated through steps S405 to 411 are given as areas of the nozzle 25 of the variable geometry type of turbocharger 20. Accordingly, the feedback correction value is finally converted to a negative pressure on the basis of, for example, a negative pressure that is developed when energizing the VGT duty solenoid valve 37 with a duty ratio of, for example, 100% and utilized as a supercharging pressure feedback negative pressure $Fc$ at step S412. Then, the final step orders return to the main routine, after the step in the main routine calling for the supercharging pressure feedback control subroutine.

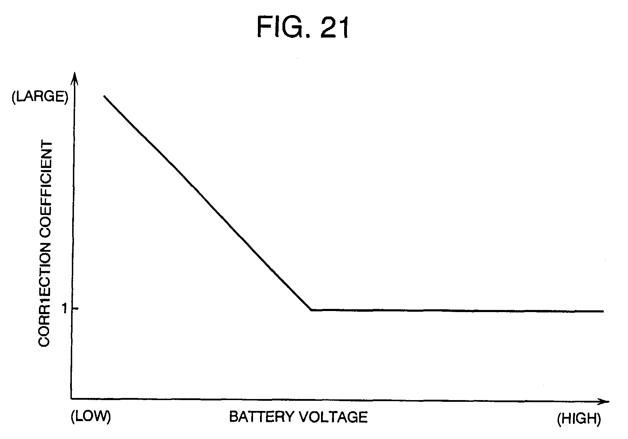

Referring back to Figure 9A, at step S11, a VGT target negative pressure $Fo$ is determined by adding the basic target VGT negative pressure $Fa,$ VGT feedback negative pressure $Fb$ and supercharging pressure feedback negative pressure $Fc$ together. Subsequently, a decision is made at step S12 as to whether the VGT negative learning control is under implementation. A resultant target negative pressure $Ffo$ is determined by employing the negative pressure $Fg$ corresponding to the learning duty ratio (80%, 50% or 20%) at step S13 when whether the VGT negative learning control is under implementation, or by employing the VGT target negative pressure $Fo$ at step S14 when whether the VGT negative learning control is not under implementation. Subsequently, in Figure 9B, after converting the resultant target negative pressure $Ffo$ to a practical duty ratio $Da$ at step S15, a correction is made of the practical duty ratio $Da$ according to the learning data X, an atmospheric pressure and a battery voltage at step S16. The correction of the practical duty ratio $Da$ according to battery voltage is made to compensate a drop in practical duty ratio that is possibly caused due to a drop in battery voltage. Specifically, as shown in Figure 21, when the battery voltage declines lower than a specified level, a correction coefficient is increased from a value of 1 (one) in inversely proportion to a drop in battery voltage. Thereafter, a decision is made at step S17 as to whether a condition for prohibiting supercharging (a supercharging prohibition condition) is satisfied. The supercharging prohibition condition is, for example, such that an ignition switch is off, that the engine starts up, that there are fluctuations in exhaust gas pressure during operation of the exhaust shutter 11, or that either one of the sensors, in particular the pressure sensor 83 associated with the VGT control is breaks down. After the practical duty ratio $Da$ or reset it to 0% at step S18 when the supercharging prohibition condition is satisfied at step S17 or directly when the supercharging prohibition condition is unsatisfied at step S17, a duty signal is output to energize the VGT duty solenoid valve 37 with the practical duty ratio *Da* at step S19. Then, the final step orders return to repeat another routine of the main routine.

As apparent from the above embodiment, since the supercharging pressure control system of the invention implements either one of or both either one of or both the supercharging pressure feedback control which is performed on the basis of a difference between a practical supercharging pressure in the intake air passage and a target supercharging pressure and the negative pressure feedback control which is performed on the basis of a difference between a practical negative pressure in a passage between the vacuum operated drive means such as a vacuum operated actuator which drives the supercharging pressure regulation means (the movable vanes or the variable nozzle of the variable geometry turbocharger) to generate and regulate a supercharging pressure and the negative pressure regulation means such as a duty solenoid valve and a target negative pressure according to said engine operating conditions, it is realized to manage effectively both the supercharging pressure feedback control of superior control accuracy and the negative pressure feedback control of superior control response and control stability, and it is also realized to control supercharging pressure in the most suitable control forms meeting engine operating conditions during implementation of the feedback control of supercharging pressure.

The present invention is widely and suitably applicable to supercharging pressure control systems that are adapted to perform both feedback control of a variable geometry type of supercharger that is implemented on the base of a practical supercharging pressure in an intake air passage and feedback control of the variable geometry type of supercharger on the base of a practical negative pressure supplied to the vacuum operated drive means operative to drive the variable geometry type of supercharger supercharging pressure control means.

It is to be understood that although the present invention has been described in detail with respect to the preferred embodiments thereof, various other embodiments and variants may occur to those skilled in the art, which are within the scope and spirit of the invention, and such other embodiments and variants are intended to be covered by the following claims.

**Claims**

1. A system of controlling an engine (1) equipped with a supercharger (20) for controlling a supercharging pressure which is generated in an intake air passage (7) by said supercharger (20), said supercharged engine control system including supercharging pressure control means (21, 22) for controlling said supercharging pressure, vacuum operated drive means (30) for driving said supercharging pressure control means (21, 22), control pressure regulating means (37) disposed in a control pressure passage (36, 39) between said vacuum operated drive means (30) and a pressure source (38) for regulating a control pressure that is supplied to said vacuum operated drive means (30), charging pressure detection means (81) for detecting said supercharging pressure in said intake air passage (7), control pressure detection means (83) for detecting said control pressure in said control pressure passage (36, 39), and engine operating condition detection means (86, 87) for detecting an engine operating condition, characterized by:

   control means (100) determining a target supercharging pressure that be generated in said intake air passage (7) and a target control pressure that be supplied to said vacuum operated drive means (36), and performing supercharging pressure feedback control by feedback controlling said control pressure regulating means (37) so as to cancel a pressure difference between said supercharging pressure and said target supercharging pressure and control pressure feedback control by feedback controlling said control pressure regulating means (37) so as to cancel a pressure difference between said control pressure and said target control pressure, wherein said control means implements selectively either one of or both said supercharging pressure feedback control and said control pressure feedback control according to said engine operating conditions.

2. A system of controlling an engine as defined in claim 1, wherein said supercharger (20) is of a variable geometry type which is variable in nozzle area of a turbine (22) disposed in said intake air passage (7) so as thereby to vary said supercharging pressure that is generated in said intake air passage (7).

3. A system of controlling an engine as defined in claim 1 or 2, wherein said control means (100) implements said supercharging pressure feedback control when said engine operating condition falls in a specified range of higher engine loads and said control pressure feedback control when said engine operating condition is out of said specified range of higher engine loads.

4. A system of controlling an engine as defined in claim 1 or 2, wherein said engine (1) is equipped with exhaust gas recirculation means (50, 54, 55, 63, 65) for controlling exhaust gas recirculation to admit partly an exhaust gas from an exhaust gas passage (9) into said intake air passage (7) according to said engine operating conditions, and said control means (100) implements said supercharging pressure feedback control when said engine operating condition falls in a specified range of engine operating conditions for said exhaust gas recirculation control and said control pressure feedback control when said engine operating condition is out of said specified range of engine operating conditions.

5. A system of controlling an engine as defined in either one of the preceding claim 1 to 4, wherein said control means further performs control pressure learning control for learning a deviation of said control pressure regulated by said control pressure regulation means while implementing said control pressure feedback control.

6. A system of controlling an engine as defined in either one of the preceding claim 1 to 5, wherein said control means performs said control pressure feedback control so as to cancel a difference between an average of a plurality of said control pressures that are detected with time and a difference between an average of a plurality of said target control pressures that are determined with time.

FIG. 1

# FIG. 2

# FIG. 3

# FIG. 4

# FIG. 5

SUPERCHARGING PRESSURE
F/B CONTROL REGION (a)

- NON-EGR CONTROL REGION -

SUPERCHARGING PRESSURE
F/B CONTROL REGION (b)

- EGR CONTROL REGION -

ENGINE LOAD (AMOUNT OF FUEL)

ENGINE SPEED

# FIG. 6

-R3-

-R2-

-R1-

NOZZLE AREA

ENGINE LOAD (AMOUNT OF FUEL)

ENGINE SPEED

ENGINE SPEED

## FIG. 7

ENGINE LOAD (AMOUNT OF FUEL)

SUPERCHARGING PRESSURE
F/B CONTROL REGION (a)

- VGT NEGATIVE PRESSURE F/B-CONTROL REGION -

SUPERCHARGING PRESSURE
F/B CONTROL REGION (b)

- EGR CONTROL REGION -

ENGINE SPEED

## FIG. 8

ENGINE LOAD (AMOUNT OF FUEL)

SUPERCHARGING PRESSURE
F/B CONTROL REGION (a)

OPEN CONTROL REGION

SUPERCHARGING PRESSURE
F/B CONTROL REGION (b)

ENGINE SPEED

# FIG. 9A

```
        ┌────────────────────────┐
        │   VGT DUTY SOLENOID    │
        │     VALVE CONTROL      │
        └────────────────────────┘
                    │
                    ▼
        ┌────────────────────────┐  S1
        │     READ IN SIGNALS    │
        └────────────────────────┘
                    │
                    ▼
        ┌────────────────────────┐  S2
        │   DETERMINATION OF Fa   │
        └────────────────────────┘
                    │
                    ▼
        ╱──────────────────────╲  S3
       ╱  VGT NEGATIVE PRESSURE  ╲  NO
       ╲  F/B CONTROL CONDITION ? ╱────────────┐
        ╲──────────────────────╱               │
                  │ YES                         │
                  ▼                             ▼
    ┌────────────────────────┐  S4    ┌──────────────────┐  S5
    │  VGT NEGATIVE PRESSURE │        │     Fb  ←  0     │
    │  F/B CONTROL FOR       │        └──────────────────┘
    │  DETERMINATION OF Fb   │               │
    └────────────────────────┘               │
                  │◄─────────────────────────┘
                  ▼
        ╱──────────────────────╲  S6
       ╱  VGT NEGATIVE PRESSURE  ╲  NO
       ╲    LEARNING CONDITION ?  ╱────────────┐
        ╲──────────────────────╱               │
                  │ YES                         │
                  ▼                             │
    ┌────────────────────────┐  S7              │
    │  VGT NEGATIVE PRESSURE │                  │
    │   LEARNING CONTROL     │                  │
    └────────────────────────┘                  │
                  │◄─────────────────────────────┘
                  ▼
        ╱──────────────────────╲  S8
       ╱ SUPERCHARGING PRESSURE  ╲  NO
       ╲  F/B CONTROL CONDITION ? ╱────────────┐
        ╲──────────────────────╱               │
                  │ YES                         │
                  ▼                             ▼
    ┌────────────────────────┐  S9    ┌──────────────────┐  S10
    │ SUPERCHARGING PRESSURE │        │     Fc  ←  0     │
    │  F/B CONTROL FOR       │        └──────────────────┘
    │  DETERMINATION OF Fc   │               │
    └────────────────────────┘               │
                  │◄─────────────────────────┘
                  ▼
    ┌────────────────────────┐  S11
    │   Fo  =  Fa + Fb + Fc  │
    └────────────────────────┘
                  │
                  ▼
        ╱──────────────────────╲  S12
       ╱   UNDER VGT NEGATIVE    ╲  NO
       ╲   PRESSURE LEARNING ?   ╱────────────┐
        ╲──────────────────────╱               │
                  │ YES                         │
                  ▼                             ▼
    ┌────────────────────────┐  S13   ┌──────────────────┐  S14
    │     Ffo  ←  Fg         │        │    Ffo  ←  Fo   │
    └────────────────────────┘        └──────────────────┘
                  │◄─────────────────────────┘
                  ▼
                 ╱─╲
                │ A │
                 ╲─╱
```

# FIG. 9B

(A)

CONVERT *Ffo* TO *Da* — S15

CORRECTION OF *Da* AND
DETERMINATION OF *Do* — S16

CHARGE PROHIBITION
CONDITION ? — S17    NO

YES

*Da* ⟵ 0 — S18

PUTPUT DUTY SIGNAL OF *Da* — S19

RETURN

# FIG. 10

# FIG. 11

Y-axis: ACTUAL SUPER-CHARGING PRESSURE
X-axis: ENGINE SPEED

CHARGE CUT-OFF REGION

# FIG. 12

Y-axis: VGT NOZZLE AREA — (CLOSE) / (OPEN)
X-axis: ATMOSPHERIC PRESSURE — (HIGH) ... (LOW)

# FIG. 13

# FIG. 14

```
        ┌─────────────────────────────┐
        │   VGT NEGATIVE PRESSURE      │
        │        F/B CONTROL           │
        └─────────────────────────────┘
                       │
        ┌─────────────────────────────┐  S201
        │  INTEGRATION OF BASIC TARGET │
        │  VGT NEGATIVE PRESSURES      │
        └─────────────────────────────┘
                       │
        ┌─────────────────────────────┐  S202
        │  INTEGRATION OF PRACTICAL VGT│
        │  NEGATIVE PRESSURES          │
        └─────────────────────────────┘
                       │
        ┌─────────────────────────────┐  S203
        │  CALCULATION OF AVERAGE BASIC│
        │  TARGET VGT NEGATIVE PRESSURE│
        └─────────────────────────────┘
                       │
        ┌─────────────────────────────┐  S204
        │ CALCULATION OF AVERAGE       │
        │ PRACTICAL VGT NEGATIVE       │
        │ PRESSURE                     │
        └─────────────────────────────┘
                       │
        ┌─────────────────────────────┐  S205
        │ CALCULATION OF DUTY RATIO FOR│
        │ AVERAGE BASIC TARGET VGT     │
        │ NEGATIVE PRESSURE BASED ON   │
        │ BASIC CHARACTERISTICS        │
        └─────────────────────────────┘
                       │
        ┌─────────────────────────────┐  S206
        │ CALCULATION OF DUTY RATIO FOR│
        │ AVERAGE PRACTICAL VGT        │
        │ NEGATIVE PRESSURE BASED      │
        │ ON BASIC CHARACTERISTICS     │
        └─────────────────────────────┘
                       │
        ┌─────────────────────────────┐  S207
        │ CALCULATION OF DURY RATIO    │
        │ DIFFERENCE BASED ON BASIC    │
        │ CHARACTERISTICS              │
        └─────────────────────────────┘
                       │
        ┌─────────────────────────────┐  S208
        │ CALCULATION OF DUTY RATIO FOR│
        │ AVERAGE BASIC TARGET VGT     │
        │ NEGATIVE PRESSURE BASED ON   │
        │ LEARNING VALUE               │
        └─────────────────────────────┘
                       │
        ┌─────────────────────────────┐  S209
        │ CALCULATION OF DUTY RATIO FOR│
        │ AVERAGE PRACTICAL VGT        │
        │ NEGATIVE PRESSURE BASED ON   │
        │ LEARNING VALUE               │
        └─────────────────────────────┘
                       │
        ┌─────────────────────────────┐  S210
        │ CALCULATION OF DURY RATIO    │
        │ DIFFERENCE BASED ON LEARNING │
        │ VALUE                        │
        └─────────────────────────────┘
                       │
        ┌─────────────────────────────┐  S211
        │ DETERMINATION OF VGT NEGATIVE│
        │ PRESSURE F/B CONTROL VALUE   │
        └─────────────────────────────┘
                       │
        ┌─────────────────────────────┐  S212
        │ DETERMINATION OF VGT F/B     │
        │ NEGATIVE PRESSURE            │
        └─────────────────────────────┘
                       │
        ┌─────────────────────────────┐
        │            RETURN            │
        └─────────────────────────────┘
```

# FIG. 15A

VGT NEGATIVE PRESSURE
LEARNING CONTROL

S301
IS LEARNING DATA $X\alpha$
NOT YET PROVIDED ?
NO / YES

S302
RESETTING TIMER COUNT $Tt$

S303
ENERGIZE VGT DUTY DOLENOID
VALVE WITH DUTY RATIO OF 80%

S304
$Tt = 0$ ?
NO
YES

S305
HAS WAITING
TIME $Ta$ PASSED ?
NO
YES

S309
PROVIDE LEARNING DATA $X\alpha$

S306
DETECTION OF $VGTvp$

S307
$VGTvint = VGTvint(i-1) + VGTvp$

S308
$Tt \leftarrow Tt - 1$

B

# FIG. 15B

(B)

S310

IS LEARNING DATA $X\beta$ NOT YET PROVIDED ? — NO

YES

S311

RESETTING TIMER COUNT $Tt$

S312

ENERGIZE VGT DUTY DOLENOID VALVE WITH DUTY RATIO OF 50%

S313

$Tt = 0$ ? — NO

YES

S314

HAS WAITING TIME $Ta$ PASSED ? — NO

YES

S318

PROVIDE LEARNING DATA $X\beta$

S315

DETECTION OF $VGTvp$

S316

$VGTvint = VGTvint(i-1) + VGTvp$

S317

$Tt \leftarrow Tt - 1$

(C)

# FIG. 15C

C

S319 — IS LEARNING DATA $X\gamma$ NOT YET PROVIDED ? — NO

YES

S320 — RESETTING TIMER COUNT $Tt$

S321 — ENERGIZE VGT DUTY DOLENOID VALVE WITH DUTY RATIO OF 20%

S322 — $Tt = 0 ?$ — NO

YES

S323 — HAS WAITING TIME $Ta$ PASSED ? — NO

YES

S327 — PROVIDE LEARNING DATA $X\gamma$

S324 — DETECTION OF $VGTvp$

S325 — $VGTvint = VGTvint(i-1) + VGTvp$

S326 — $Tt \leftarrow Tt - 1$

S328 — PROVIDE LEARNING DATA $X$

RTURN

# FIG. 16

# FIG. 17

# FIG. 18

# FIG. 19

```
        ┌─────────────────────────────┐
        │  SUPERCHARGING PRESSURE     │
        │       F/B CONTROL           │
        └─────────────────────────────┘
                      │
                      ▼
        ┌─────────────────────────────┐  S401
        │   DETERMINATION OD Pbstg     │
        └─────────────────────────────┘
                      │
                      ▼
        ┌─────────────────────────────┐  S402
        │  CORRECTION OF Pbstg ACCORDING│
        │  TO ATMOSPHERIC PRESSURE     │
        └─────────────────────────────┘
                      │
                      ▼
        ┌─────────────────────────────┐  S403
        │        READ IN Pact          │
        └─────────────────────────────┘
                      │
                      ▼
        ┌─────────────────────────────┐  S404
        │      CALCULATION OF ΔP       │
        └─────────────────────────────┘
                      │
                      ▼
        ┌─────────────────────────────┐  S405
        │    DETERMINATION OF p-TERM   │
        └─────────────────────────────┘
                      │
                      ▼
        ┌─────────────────────────────┐  S406
        │    DETERMINATION OF i-TERM   │
        └─────────────────────────────┘
                      │
                      ▼
        ┌─────────────────────────────┐  S407
        │  DETERMINATION OF AVERAGE i-TERM│
        └─────────────────────────────┘
                      │
                      ▼                         S408
              ◇ IN PARTIAL LOAD REGION ? ◇ ──NO──┐
                      │ YES                       │
```

S409 — ADD LATEST AVERAGE i-TERM TO LAST i-TERM FOR PARTIAL LOAD OPERATION

S410 — ADD LATEST AVERAGE i-TERM TO LAST i-TERM FOR FULL LOAD OPERATION

S411 — CALCULATION OF SUPERCHARGING PRESSURE F/B CORRECTION VALUE

S412 — DETERMINATION OF SUPERCHARGING PRESSURE F/B NEGATIVE PRESSURE

RETURN

# FIG. 20

# FIG. 21

**European Patent Office**

## EUROPEAN SEARCH REPORT

Application Number

EP 00 11 6264

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br>A | US 5 123 246 A (YOUNESSI ET AL.)<br>23 June 1992 (1992-06-23)<br>* column 2, line 15 - column 3, line 55; figures * | 1,2,5<br>3 | F02B37/24<br>F02B37/22 |
| A | EP 0 930 423 A (DAIMLERCHRYSLER)<br>21 July 1999 (1999-07-21)<br>* abstract * | 1-4 | |
| A | US 4 671 068 A (MOOODY ET AL.)<br>9 June 1987 (1987-06-09)<br>* abstract; figures * | 1 | |
| A | FR 2 474 591 A (MAN)<br>31 July 1981 (1981-07-31)<br>* figures * | 1 | |
| | | | TECHNICAL FIELDS SEARCHED (Int.Cl.7) |
| | | | F02B<br>F02D |

The present search report has been drawn up for all claims

| Place of search | Date of completion of the search | Examiner |
|---|---|---|
| THE HAGUE | 9 November 2000 | Kooijman, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

## ANNEX TO THE EUROPEAN SEARCH REPORT
## ON EUROPEAN PATENT APPLICATION NO.   EP 00 11 6264

This annex lists the patent family members relating to the patent documents cited in the above-mentioned European search report.
The members are as contained in the European Patent Office EDP file on
The European Patent Office is in no way liable for these particulars which are merely given for the purpose of information.

09-11-2000

| Patent document cited in search report | | Publication date | Patent family member(s) | | Publication date |
|---|---|---|---|---|---|
| US 5123246 | A | 23-06-1992 | NONE | | |
| EP 930423 | A | 21-07-1999 | DE 19801395 | A | 22-07-1999 |
| US 4671068 | A | 09-06-1987 | CA 1265600 | A | 06-02-1990 |
| | | | DE 3760373 | D | 31-08-1989 |
| | | | EP 0232957 | A | 19-08-1987 |
| | | | JP 62186015 | A | 14-08-1987 |
| FR 2474591 | A | 31-07-1981 | DE 3002701 | A | 30-07-1981 |
| | | | DK 21381 | A | 26-07-1981 |
| | | | JP 56110521 | A | 01-09-1981 |

EPO FORM P0459

For more details about this annex : see Official Journal of the European Patent Office, No. 12/82